(19) Europäisches Patentamt
European Patent Office
Office européen des brevets

(11) **EP 4 794 418 A1**

(12) **EUROPEAN PATENT APPLICATION**
published in accordance with Art. 153(4) EPC

(43) Date of publication:
**19.08.2026 Bulletin 2026/34**

(21) Application number: **25752459.5**

(22) Date of filing: **07.02.2025**

(51) International Patent Classification (IPC):
***H04W 72/0453*** (2023.01) ***H04W 72/1268*** (2023.01)
***H04W 72/1273*** (2023.01) ***H04W 72/232*** (2023.01)
***H04W 72/11*** (2023.01) ***H04W 72/0446*** (2023.01)
***H04W 74/00*** (2009.01) ***H04W 74/0833*** (2024.01)
***H04L 5/00*** (2006.01)

(52) Cooperative Patent Classification (CPC):
**H04L 5/00; H04W 72/0446; H04W 72/0453; H04W 72/11; H04W 72/1268; H04W 72/1273; H04W 72/232; H04W 74/00; H04W 74/0833**

(86) International application number:
**PCT/KR2025/001803**

(87) International publication number:
**WO 2025/170349 (14.08.2025 Gazette 2025/33)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **08.02.2024 KR 20240019998**
**15.02.2024 KR 20240022183**

(71) Applicant: **Wilus Institute of Standards and Technology Inc.**
**Gyeonggi-do 13595 (KR)**

(72) Inventors:
- **NOH, Minseok**
**Seongnam-si Gyeonggi-do 13595 (KR)**
- **SON, Juhyung**
**Seongnam-si Gyeonggi-do 13595 (KR)**
- **KWAK, Jinsam**
**Seongnam-si Gyeonggi-do 13595 (KR)**

(74) Representative: **Metroconsult Srl**
**Via Sestriere, 100**
**10060 None (TO) (IT)**

# (54) METHOD AND DEVICE FOR TRANSMITTING SIGNALS IN WIRELESS COMMUNICATION SYSTEM

(57) The present invention relates to a wireless communication system and, particularly, to a method and a wireless device therefor, the method comprising the steps of: receiving RACH configuration information, the RACH configuration information including RB offset information used to determine an RO start position in a frequency domain; identifying an RO set in a PRACH slot on the basis of the RB offset information, the PRACH slot including an SBFD symbol set and/or a non-SBFD symbol set; and transmitting a PRACH in the RO set, wherein a reference RB to which the RB offset information is applied in the PRACH slot is differently interpreted according to whether the type of symbol in which the RO set is positioned is an SBFD symbol.

Fig. 18

Freq. domain
DL or Flexible symbols
UL symbols
DL slot
DL slot
DL slot
Flexible slot
UL slot
D subband
U subband
D subband
Valid RO
Valid RO
Valid RO
Valid RO
Valid RO for legacy UEs
Range of msg-1-FrequencyStart for legacy UEs in freq. domain
Time domain
Staring of RO within UL subband for SBFD operation in DL slot or Flexible slot in freq. domain
starting symbol for PRACH slot = starting symbol of configured UL subband in time domain
e.g., msg-1-FrequencyStart within Flexible slot or UL symbols in flexible slot or UL slot

EP 4 794 418 A1

## Description

### Technical Field

The disclosure relates to a wireless communication system. Particularly, the disclosure relates to a method of transmitting a signal in a wireless communication system, and a device using the same.

### Background Art

After commercialization of 4th generation (4G) communication system, in order to meet the increasing demand for wireless data traffic, efforts are being made to develop new 5th generation (5G) communication systems. The 5G communication system is called as a beyond 4G network communication system, a post LTE system, or a new radio (NR) system. In order to achieve a high data transfer rate, 5G communication systems include systems operated using the millimeter wave (mmWave) band of 6 GHz or more, and include a communication system operated using a frequency band of 6 GHz or less in terms of ensuring coverage so that implementations in base stations and terminals are under consideration.

A 3rd generation partnership project (3GPP) NR system enhances spectral efficiency of a network and enables a communication provider to provide more data and voice services over a given bandwidth. Accordingly, the 3GPP NR system is designed to meet the demands for high-speed data and media transmission in addition to supports for large volumes of voice. The advantages of the NR system are to have a higher throughput and a lower latency in an identical platform, support for frequency division duplex (FDD) and time division duplex (TDD), and a low operation cost with an enhanced end-user environment and a simple architecture.

For more efficient data processing, dynamic TDD of the NR system may use a method for varying the number of orthogonal frequency division multiplexing (OFDM) symbols that may be used in an uplink and downlink according to data traffic directions of cell users. For example, when the downlink traffic of the cell is larger than the uplink traffic, the base station may allocate a plurality of downlink OFDM symbols to a slot (or subframe). Information about the slot configuration should be transmitted to the terminals.

In order to alleviate the path loss of radio waves and increase the transmission distance of radio waves in the mmWave band, in 5G communication systems, beamforming, massive multiple input/output (massive MIMO), full dimensional MIMO (FD-MIMO), array antenna, analog beam-forming, hybrid beamforming that combines analog beamforming and digital beamforming, and large scale antenna technologies are discussed. In addition, for network improvement of the system, in the 5G communication system, technology developments related to evolved small cells, advanced small cells, cloud radio access network (cloud RAN), ultra-dense network, device to device communication (D2D), vehicle to everything communication (V2X), wireless backhaul, non-terrestrial network communication (NTN), moving network, cooperative communication, coordinated multi-points (CoMP), interference cancellation, and the like are being made. In addition, in the 5G system, hybrid FSK and QAM modulation (FQAM) and sliding window superposition coding (SWSC), which are advanced coding modulation (ACM) schemes, and filter bank multi-carrier (FBMC), non-orthogonal multiple access (NOMA), and sparse code multiple access (SCMA), which are advanced connectivity technologies, are being developed.

Meanwhile, in a human-centric connection network where humans generate and consume information, the Internet has evolved into the Internet of Things (IoT) network, which exchanges information among distributed components such as objects. Internet of Everything (IoE) technology, which combines IoT technology with big data processing technology through connection with cloud servers, is also emerging. In order to implement IoT, technology elements such as sensing technology, wired/wireless communication and network infrastructure, service interface technology, and security technology are required, so that in recent years, technologies such as sensor network, machine to machine (M2M), and machine type communication (MTC) have been studied for connection between objects. In the IoT environment, an intelligent internet technology (IT) service that collects and analyzes data generated from connected objects to create new value in human life can be provided. Through the fusion and mixture of existing information technology (IT) and various industries, IoT can be applied to fields such as smart home, smart building, smart city, smart car or connected car, smart grid, healthcare, smart home appliance, and advanced medical service.

Accordingly, various attempts have been made to apply the 5G communication system to the IoT network. For example, technologies such as a sensor network, a machine to machine (M2M), and a machine type communication (MTC) are implemented by techniques such as beamforming, MIMO, and array antennas. The application of the cloud RAN as the big data processing technology described above is an example of the fusion of 5G technology and IoT technology. Generally, a mobile communication system has been developed to provide voice service while ensuring the user's activity.

However, the mobile communication system is gradually expanding not only the voice but also the data service, and now it has developed to the extent of providing high-speed data service. However, in a mobile communication system

in which services are currently being provided, a more advanced mobile communication system is required due to a shortage phenomenon of resources and a high-speed service demand of users.

## Disclosure of Invention

### Technical Problem

An aspect of the disclosure is to provide a method for efficiently transmitting a signal in a wireless communication system, and a device using the same. Specifically, an objective of the disclosure is to provide a method for configuring a RACH occasion (RO) in a wireless communication system, and a device using the same. In addition, an objective of the disclosure is to provide a method for transmitting and receiving signals based on an RO, and a device using the same.

### Solution to Problem

An aspect of the disclosure provides a UE configured to operate in a wireless communication system, the UE including: a communication module; and a processor controlling the communication module, wherein the processor is configured to: receive random access channel (RACH) configuration information, wherein the RACH configuration information includes resource block (RB) offset information used to determine a RACH occasion (RO) start position in a frequency domain; identify an RO set in a physical random access channel (PRACH) slot based on the RB offset information, wherein the PRACH slot includes at least one of a subband non-overlapping full duplex (SBFD) symbol set or a non-SBFD symbol set; and transmit a PRACH in the RO set, wherein the SBFD symbol set includes an uplink (UL) subband in a frequency domain, and wherein a reference RB to which the RB offset information is applied in the PRACH slot is differently configured depending on whether the type of a symbol in which the RO set is positioned is an SBFD symbol.

Another aspect of the disclosure provides a base station configured to operate in a wireless communication system, the base station including: a communication module; and a processor controlling the communication module, wherein the processor is configured to: transmit random access channel (RACH) configuration information, wherein the RACH configuration information includes resource block (RB) offset information used to determine a RACH occasion (RO) start position in a frequency domain; identify an RO set in a physical random access channel (PRACH) slot based on the RB offset information, wherein the PRACH slot includes at least one of a subband non-overlapping full duplex (SBFD) symbol set or a non-SBFD symbol set; and receive a PRACH in the RO set, wherein the SBFD symbol set includes an uplink (UL) subband in a frequency domain, and wherein a reference RB to which the RB offset information is applied in the PRACH slot is differently configured depending on whether the type of a symbol in which the RO set is positioned is an SBFD symbol.

Another aspect of the disclosure provides a method used by a UE in a wireless communication system, the method including: receiving random access channel (RACH) configuration information, wherein the RACH configuration information includes resource block (RB) offset information used to determine a RACH occasion (RO) start position in a frequency domain; identifying an RO set in a physical random access channel (PRACH) slot based on the RB offset information, wherein the PRACH slot includes at least one of a subband non-overlapping full duplex (SBFD) symbol set or a non-SBFD symbol set; and transmitting a PRACH in the RO set, wherein the SBFD symbol set includes an uplink (UL) subband in a frequency domain, and wherein a reference RB to which the RB offset information is applied in the PRACH slot is differently configured depending on whether the type of a symbol in which the RO set is positioned is an SBFD symbol.

Another aspect of the disclosure provides a method used by a base station in a wireless communication system, the method including: transmitting random access channel (RACH) configuration information, wherein the RACH configuration information includes resource block (RB) offset information used to determine a RACH occasion (RO) start position in a frequency domain; identifying an RO set in a physical random access channel (PRACH) slot based on the RB offset information, wherein the PRACH slot includes at least one of a subband non-overlapping full duplex (SBFD) symbol set or a non-SBFD symbol set; and receiving a PRACH in the RO set, wherein the SBFD symbol set includes an uplink (UL) subband in a frequency domain, and wherein a reference RB to which the RB offset information is applied in the PRACH slot is differently configured depending on whether the type of a symbol in which the RO set is positioned is an SBFD symbol.

Preferably, when the RO set is positioned in the SBFD symbol set, the reference RB may be configured as the lowest RB among UL-usable RBs in the SBFD symbol set, and when the RO set is positioned in the non-SBFD symbol set, the reference RB may be configured as the lowest RB within the UL bandwidth part (BWP) in the non-SBFD symbol set.

Preferably, the SBFD symbol set may further include a downlink (DL)-usable RB outside the UL subband in the frequency domain, and the UL-usable RBs include RBs in the UL subband.

Preferably, the RACH configuration information may include Rach-ConfigGeneric information, and the RB offset

information may include msg-1-FrequencyStart.

Preferably, the UL subband may be configured based on a higher layer signal.

## Advantageous Effects of Invention

The disclosure provides a method for efficiently transmitting a signal in a wireless communication system, and a device using the same. In addition, the disclosure provides a method for configuring an RO in a wireless communication system and a device using the same. In addition, an objective of the disclosure is to provide a method for transmitting and receiving signals based on an RO, and a device using the method.

The effects that can be obtained from the disclosure are not limited to the effects mentioned above, and other effects that are not mentioned will be clearly understood by those skilled in the art to which the disclosure belongs from the description below.

## Brief Description of Drawings

FIG. 1 illustrates an example of a wireless frame structure used in a wireless communication system.
FIG. 2 illustrates an example of a downlink (DL)/uplink (UL) slot structure in a wireless communication system.
FIG. 3 is a diagram for explaining a physical channel used in a 3GPP system and a typical signal transmission method using the physical channel.
FIG. 4a and FIG. 4b illustrate an SS/PBCH block for initial cell access in a 3GPP NR system.
FIG. 5a and FIG. 5b illustrate a procedure for transmitting control information and a control channel in a 3GPP NR system.
FIG. 6 illustrates a control resource set (CORESET) in which a physical downlink control channel (PDCCH) may be transmitted in a 3GPP NR system.
FIG. 7 illustrates a method for configuring a PDCCH search space in a 3GPP NR system.
FIG. 8 is a conceptual diagram illustrating carrier aggregation.
FIG. 9 is a diagram for explaining single carrier communication and multiple carrier communication.
FIG. 10 is a diagram showing an example in which a cross carrier scheduling technique is applied.
FIG. 11 is a block diagram showing the configurations of a UE and a base station according to an embodiment of the present disclosure.
FIGS. 12 and 13 illustrate a subband configuration method.
FIG. 14 illustrates a random access channel (RACH) procedure.
FIGS. 15 to 16 illustrate legacy RACH configuration information.
FIG. 17 illustrates a RACH occasion (RO) within a slot.
FIGS. 18 to 20 illustrate an RO configuration method according to an embodiment of the disclosure.
FIGS. 21 to 24 illustrate an RO-SSB (synchronization/physical broadcast channel) mapping according to an embodiment of the disclosure.
FIGS. 25 to 29 illustrate a valid RO determination method according to an embodiment of the disclosure.
FIGS. 30 to 33 illustrate signal transmission and reception according to an embodiment of the disclosure.

## Mode for Carrying out the Invention

Terms used in the specification adopt general terms which are currently widely used as possible by considering functions in the present disclosure, but the terms may be changed depending on an intention of those skilled in the art, customs, and emergence of new technology. Further, in a specific case, there is a term arbitrarily selected by an applicant and in this case, a meaning thereof will be described in a corresponding description part of the present disclosure. Accordingly, it intends to be revealed that a term used in the specification should be analyzed based on not just a name of the term but a substantial meaning of the term and contents throughout the specification.

Throughout this specification and the claims that follow, when it is described that an element is "connected" to another element, the element may be "directly connected" to the other element or "electrically connected" to the other element through a third element. Further, unless explicitly described to the contrary, the word "comprise" will be understood to imply the inclusion of stated elements but not the exclusion of any other elements unless otherwise stated. Moreover, limitations such as "more than or equal to" or "less than or equal to" based on a specific threshold may be appropriately substituted with "more than" or "less than", respectively, in some exemplary embodiments.

The following technology may be used in various wireless access systems, such as code division multiple access (CDMA), frequency division multiple access (FDMA), time division multiple access (TDMA), orthogonal frequency division

multiple access (OFDMA), single carrier-FDMA (SC-FDMA), and the like. The CDMA may be implemented by a wireless technology such as universal terrestrial radio access (UTRA) or CDMA2000. The TDMA may be implemented by a wireless technology such as global system for mobile communications (GSM)/general packet radio service (GPRS)/enhanced data rates for GSM evolution (EDGE). The OFDMA may be implemented by a wireless technology such as IEEE 802.11(Wi-Fi), IEEE 802.16(WiMAX), IEEE 802-20, evolved UTRA (E-UTRA), and the like. The UTRA is a part of a universal mobile telecommunication system (UMTS). 3rd generation partnership project (3GPP) long term evolution (LTE) is a part of an evolved UMTS (E-UMTS) using evolved-UMTS terrestrial radio access (E-UTRA) and LTE-advanced (A) is an evolved version of the 3GPP LTE. 3GPP new radio (NR) is a system designed separately from LTE/LTE-A, and is a system for supporting enhanced mobile broadband (eMBB), ultra-reliable and low latency communication (URLLC), and massive machine type communication (mMTC) services, which are requirements of IMT-2020. For the clear description, 3GPP NR is mainly described, but the technical idea of the present disclosure is not limited thereto.

Unless otherwise specified in this specification, a base station may refer to a next generation node B (gNB) as defined in 3GPP NR. Furthermore, unless otherwise specified, a terminal may refer to a user equipment (UE). Hereinafter, in order to facilitate understanding of the description, each content is separately divided into embodiments and described, but each of the embodiments may be used in combination with each other. In the present disclosure, the configuration of the UE may indicate configuration by the base station. Specifically, the base station may transmit a channel or signal to the UE to configure an operation of the UE or a parameter value used in a wireless communication system.

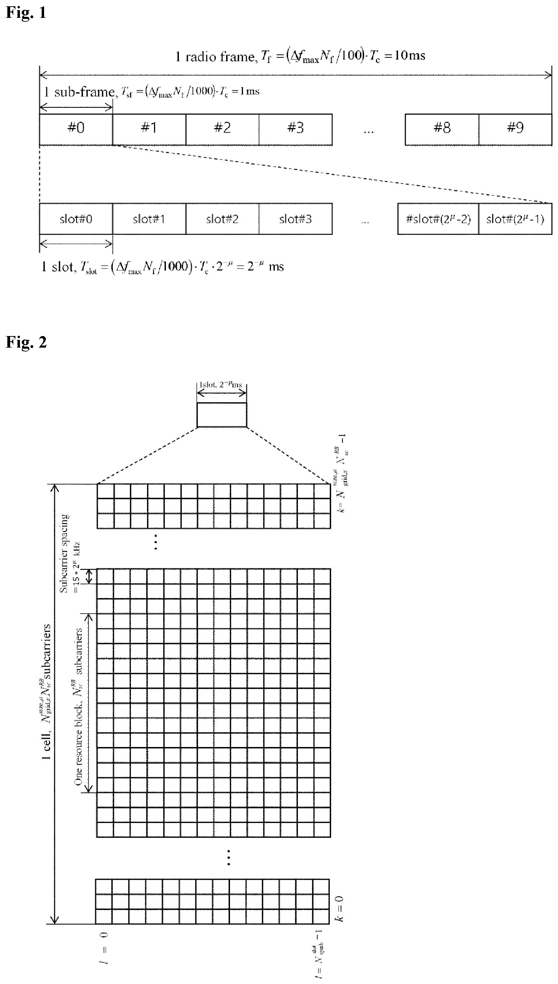

FIG. 1 illustrates an example of a wireless frame structure used in a wireless communication system.

Referring to FIG. 1, the wireless frame (or radio frame) used in the 3GPP NR system may have a length of 10 ms ($\Delta f_{max}N_f$ / 100) * $T_c$). In addition, the wireless frame includes 10 subframes (SFs) having equal sizes. Herein, $\Delta f_{max}$ =480*10$^3$ Hz, $N_f$=4096, $T_c=1/(\Delta f_{ref}*N_{f,ref})$, $\Delta f_{ref}$=15*10$^3$ Hz, and $N_{f,ref}$=2048. Numbers from 0 to 9 may be respectively allocated to 10 subframes within one subframe. Each subframe has a length of 1 ms and may include one or more slots according to a subcarrier spacing. More specifically, in the 3GPP NR system, the subcarrier spacing that may be used is 15*$2^\mu$ kHz, and $\mu$ can have a value of $\mu$ = 0~4 as subcarrier spacing configuration. That is, 15 kHz, 30 kHz, 60 kHz, 120 kHz and 240 kHz may be used for subcarrier spacing. One subframe having a length of 1 ms may include $2^\mu$ slots. In this case, the length of each slot is $2^{-\mu}$ ms. Numbers from 0 to $2^\mu$-1 may be respectively allocated to $2^\mu$ slots within one wireless frame. In addition, numbers from 0 to 10*$2^\mu$-1 may be respectively allocated to slots within one subframe. The time resource may be distinguished by at least one of a wireless frame number (also referred to as a wireless frame index), a subframe number (also referred to as a subframe number), and a slot number (or a slot index).

FIG. 2 illustrates an example of a downlink (DL)/uplink (UL) slot structure in a wireless communication system. In particular, FIG. 2 shows the structure of the resource grid of the 3GPP NR system.

There is one resource grid per antenna port. Referring to FIG. 2, a slot includes a plurality of orthogonal frequency division multiplexing (OFDM) symbols in a time domain and includes a plurality of resource blocks (RBs) in a frequency domain. An OFDM symbol also means one symbol section. Unless otherwise specified, OFDM symbols may be referred to simply as symbols. One RB includes 12 consecutive subcarriers in the frequency domain. Referring to FIG. 2, a signal transmitted from each slot may be represented by a resource grid including $N^{size,\mu}_{grid,x}$ * $N^{RB}_{sc}$ subcarriers, and $N^{slot}_{symb}$ OFDM symbols. Here, x = DL when the signal is a DL signal, and x = UL when the signal is an UL signal. $N^{size,\mu}_{grid,x}$ represents the number of resource blocks (RBs) according to the subcarrier spacing constituent $\mu$ (x is DL or UL), and $N^{slot}_{symb}$ represents the number of OFDM symbols in a slot. $N^{RB}_{sc}$ is the number of subcarriers constituting one RB and $N^{RB}_{sc}$ = 12. An OFDM symbol may be referred to as a cyclic shift OFDM (CP-OFDM) symbol or a discrete Fourier transform spread OFDM (DFT-s-OFDM) symbol according to a multiple access scheme.

The number of OFDM symbols included in one slot may vary according to the length of a cyclic prefix (CP). For example, in the case of a normal CP, one slot includes 14 OFDM symbols, but in the case of an extended CP, one slot may include 12 OFDM symbols. In a specific embodiment, the extended CP can only be used at 60 kHz subcarrier spacing. In FIG. 2, for convenience of description, one slot is configured with 14 OFDM symbols by way of example, but embodiments of the present disclosure may be applied in a similar manner to a slot having a different number of OFDM symbols. Referring to FIG. 2, each OFDM symbol includes $N^{size,\mu}_{grid,x}$* $N^{RB}_{sc}$ subcarriers in the frequency domain. The type of subcarrier may be divided into a data subcarrier for data transmission, a reference signal subcarrier for transmission of a reference signal, and a guard band. The carrier frequency is also referred to as the center frequency (fc).

One RB may be defined by $N^{RB}_{sc}$ (e.g., 12) consecutive subcarriers in the frequency domain. For reference, a resource configured with one OFDM symbol and one subcarrier may be referred to as a resource element (RE) or a tone. Therefore, one RB can be configured with $N^{slot}_{symb}$ * $N^{RB}_{sc}$ resource elements. Each resource element in the resource grid can be uniquely defined by a pair of indexes (k, l) in one slot. k may be an index assigned from 0 to $N^{size,\mu}_{grid,x}$ * $N^{RB}_{sc}$ - 1 in the frequency domain, and l may be an index assigned from 0 to $N^{slot}_{symb}$ - 1 in the time domain.

In order for the UE to receive a signal from the base station or to transmit a signal to the base station, the time/frequency of the UE may be synchronized with the time/frequency of the base station. This is because when the base station and the UE are synchronized, the UE can determine the time and frequency parameters necessary for demodulating the DL signal and transmitting the UL signal at the correct time.

Each symbol of a radio frame used in a time division duplex (TDD) or an unpaired spectrum may be configured with at least one of a DL symbol, an UL symbol, and a flexible symbol. A radio frame used as a DL carrier in a frequency division duplex (FDD) or a paired spectrum may be configured with a DL symbol or a flexible symbol, and a radio frame used as a UL carrier may be configured with a UL symbol or a flexible symbol. In the DL symbol, DL transmission is possible, but UL transmission is impossible. In the UL symbol, UL transmission is possible, but DL transmission is impossible. The flexible symbol may be determined to be used as a DL or an UL according to a signal.

Information on the type of each symbol, i.e., information representing any one of DL symbols, UL symbols, and flexible symbols, may be configured with a cell-specific or common radio resource control (RRC) signal. In addition, information on the type of each symbol may additionally be configured with a UE-specific or dedicated RRC signal. The base station informs, by using cell-specific RRC signals, i) the period of cell-specific slot configuration, ii) the number of slots with only DL symbols from the beginning of the period of cell-specific slot configuration, iii) the number of DL symbols from the first symbol of the slot immediately following the slot with only DL symbols, iv) the number of slots with only UL symbols from the end of the period of cell specific slot configuration, and v) the number of UL symbols from the last symbol of the slot immediately before the slot with only the UL symbol. Here, symbols not configured with any one of a UL symbol and a DL symbol are flexible symbols.

When the information on the symbol type is configured with the UE-specific RRC signal, the base station may signal whether the flexible symbol is a DL symbol or an UL symbol in the cell-specific RRC signal. In this case, the UE-specific RRC signal can not change a DL symbol or a UL symbol configured with the cell-specific RRC signal into another symbol type. The UE-specific RRC signal may signal the number of DL symbols among the $N^{slot}_{symb}$ symbols of the corresponding slot for each slot, and the number of UL symbols among the $N^{slot}_{symb}$ symbols of the corresponding slot. In this case, the DL symbol of the slot may be continuously configured with the first symbol to the i-th symbol of the slot. In addition, the UL symbol of the slot may be continuously configured with the j-th symbol to the last symbol of the slot (where i <j). In the slot, symbols not configured with any one of a UL symbol and a DL symbol are flexible symbols.

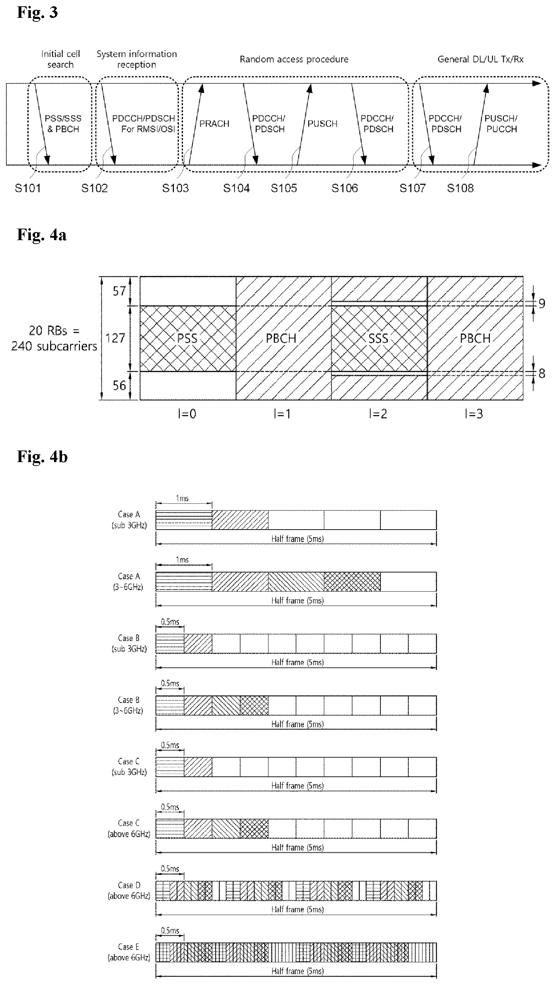

FIG. 3 is a diagram for explaining a physical channel used in a 3GPP system (e.g., NR) and a typical signal transmission method using the physical channel.

If the power of the UE is turned on or the UE camps on a new cell, the UE performs an initial cell search (S101). Specifically, the UE may synchronize with the BS in the initial cell search. For this, the UE may receive a primary synchronization signal (PSS) and a secondary synchronization signal (SSS) from the base station to synchronize with the base station, and obtain information such as a cell ID. Thereafter, the UE can receive the physical broadcast channel from the base station and obtain the broadcast information in the cell.

Upon completion of the initial cell search, the UE receives a physical downlink shared channel (PDSCH) according to the physical downlink control channel (PDCCH) and information in the PDCCH, so that the UE can obtain more specific system information than the system information obtained through the initial cell search (S102). Here, the system information received by the UE is cell-common system information for the UE to properly operate at the physical layer in Radio Resource Control (RRC), and is referred to as remaining system information (RMSI) or system information block (SIB) 1.

When the UE initially accesses the base station or does not have radio resources for signal transmission (when the UE is in RRC_IDLE mode), the UE may perform a random access procedure on the base station (operations S103 to S106). First, the UE may transmit a preamble through a physical random access channel (PRACH) (S103), and receive a response message for the preamble from the base station through the PDCCH and the corresponding PDSCH (S104). When a valid random access response is received by the UE, the UE transmits data including the identifier of the UE and the like to the base station through a physical uplink shared channel (PUSCH) indicated by the UL grant transmitted through the PDCCH from the base station (S105). Next, the UE waits for reception of the PDCCH as an indication of the base station for collision resolution. If the UE successfully receives the PDCCH through the identifier of the UE (S106), the random access process is terminated. During the random access process, the UE may obtain UE-specific system information necessary for the UE to properly operate at the physical layer in the RRC layer. When the UE obtains UE-specific system information from the RRC layer, the UE enters the RRC_CONNECTED mode.

The RRC layer is used for message generation and management for control between a UE and a radio access network (RAN). More specifically, in the RRC layer, the base station and the UE may perform broadcasting of cell system information, delivery management of paging messages, mobility management and handover, measurement report and control thereof, UE capability management, and storage management including existing management necessary for all UEs in the cell. In general, since the update of the signal (hereinafter, referred to as RRC signal) transmitted from the RRC layer is longer than the transmission/reception period (i.e., transmission time interval, TTI) in the physical layer, the RRC signal may be maintained unchanged for a long period.

After the above-described procedure, the UE receives PDCCH/PDSCH (S107) and transmits a physical uplink shared channel (PUSCH)/physical uplink control channel (PUCCH) (S108) as a general UL/DL signal transmission procedure. In particular, the UE may receive downlink control information (DCI) through the PDCCH. The DCI may include control information such as resource allocation information for the UE. Also, the format of the DCI may vary depending on

the intended use. The uplink control information (UCI) that the UE transmits to the base station through UL includes a DL/UL ACK/NACK signal, a channel quality indicator (CQI), a precoding matrix index (PMI), a rank indicator (RI), and the like. Here, the CQI, PMI, and RI may be included in channel state information (CSI). In the 3GPP NR system, the UE may transmit control information such as HARQ-ACK and CSI described above through the PUSCH and/or PUCCH.

FIG. 4a and 4b illustrate an SS/PBCH block for initial cell access in a 3GPP NR system.

When the power is turned on or wanting to access a new cell, the UE may obtain time and frequency synchronization with the cell and perform an initial cell search procedure. The UE may detect a physical cell identity $N^{cell}_{ID}$ of the cell during a cell search procedure. For this, the UE may receive a synchronization signal, for example, a primary synchronization signal (PSS) and a secondary synchronization signal (SSS), from a base station, and synchronize with the base station. In this case, the UE can obtain information such as a cell identity (ID).

Referring to FIG. 4a, a synchronization signal (SS) will be described in more detail. The synchronization signal can be classified into PSS and SSS. The PSS may be used to obtain time domain synchronization and/or frequency domain synchronization, such as OFDM symbol synchronization and slot synchronization. The SSS can be used to obtain frame synchronization and cell group ID. Referring to FIG. 4a and Table 1, the SS/PBCH block can be configured with consecutive 20 RBs (= 240 subcarriers) in the frequency axis, and can be configured with consecutive 4 OFDM symbols in the time axis. In this case, in the SS/PBCH block, the PSS is transmitted in the first OFDM symbol and the SSS is transmitted in the third OFDM symbol through the 56th to 182th subcarriers. Here, the lowest subcarrier index of the SS/PBCH block is numbered from 0. In the first OFDM symbol in which the PSS is transmitted, the base station does not transmit a signal through the remaining subcarriers, i.e., 0th to 55th and 183th to 239th subcarriers. In addition, in the third OFDM symbol in which the SSS is transmitted, the base station does not transmit a signal through 48th to 55th and 183th to 191th subcarriers. The base station transmits a physical broadcast channel (PBCH) through the remaining RE except for the above signal in the SS/PBCH block.

[Table 1]

| Channel or signal | OFDM symbol number *l* relative to the start of an SS/PBCH block | Subcarrier number *k* relative to the start of an SS/PBCH block |
|---|---|---|
| PSS | 0 | 56, 57, ..., 182 |
| SSS | 2 | 56, 57, ..., 182 |
| Set to 0 | 0 | 0, 1, ..., 55, 183, 184, ..., 239 |
| | 2 | 48, 49, .., 55, 183, 184, ..., 191 |
| PBCH | 1, 3 | 0, 1, ..., 239 |
| | 2 | 0, 1, ..., 47,<br>192, 193, ..., 239 |
| DM-RS for PBCH | 1, 3 | 0+*v*,4+*v*,8+*v*,..,236+*v* |
| | 2 | 0+*v*,4+*v*,8+*v*,...,44+*v*<br>192+*v*,196+*v*,...,236+*v* |

The SS allows a total of 1008 unique physical layer cell IDs to be grouped into 336 physical-layer cell-identifier groups, each group including three unique identifiers, through a combination of three PSSs and SSSs, specifically, such that each physical layer cell ID is to be only a part of one physical-layer cell-identifier group. Therefore, the physical layer cell ID $N^{cell}_{ID} = 3N^{(1)}_{ID} + N^{(2)}_{ID}$ can be uniquely defined by the index $N^{(1)}_{ID}$ ranging from 0 to 335 indicating a physical-layer cell-identifier group and the index $N^{(2)}_{ID}$ ranging from 0 to 2 indicating a physical-layer identifier in the physical-layer cell-identifier group. The UE may detect the PSS and identify one of the three unique physical-layer identifiers. In addition, the UE can detect the SSS and identify one of the 336 physical layer cell IDs associated with the physical-layer identifier. In this case, the sequence $d_{PSS}(n)$ of the PSS is as follows.

$$d_{\mathrm{PSS}}(n) = 1 - 2x(m)$$

$$m = \left(n + 43N^{(2)}_{\mathrm{ID}}\right) \bmod 127$$

$$0 \le n < 127$$

Here, $x(i+7)=(x(i+4)+x(i))\bmod 2$ and is given as,

$$\begin{bmatrix} x(6) & x(5) & x(4) & x(3) & x(2) & x(1) & x(0) \end{bmatrix} = \begin{bmatrix} 1 & 1 & 1 & 0 & 1 & 1 & 0 \end{bmatrix}$$

Further, the sequence dsss(n) of the SSS is as follows.

$$d_{\mathrm{SSS}}(n) = \left[1-2x_0\left((n+m_0)\bmod 127\right)\right]\left[1-2x_1\left((n+m_1)\bmod 127\right)\right]$$

$$m_0 = 15\left\lfloor \frac{N_{\mathrm{ID}}^{(1)}}{112} \right\rfloor + 5N_{\mathrm{ID}}^{(2)}$$

$$m_1 = N_{\mathrm{ID}}^{(1)} \bmod 112$$

$$0 \le n < 127$$

$$x_0(i+7) = \left(x_0(i+4) + x_0(i)\right)\bmod 2$$

Here, $x_1(i+7)=(x_1(i+1)+x_1(i))\bmod 2$ and is given as,

$$\begin{bmatrix} x_0(6) & x_0(5) & x_0(4) & x_0(3) & x_0(2) & x_0(1) & x_0(0) \end{bmatrix} = \begin{bmatrix} 0 & 0 & 0 & 0 & 0 & 0 & 1 \end{bmatrix}$$

$$\begin{bmatrix} x_1(6) & x_1(5) & x_1(4) & x_1(3) & x_1(2) & x_1(1) & x_1(0) \end{bmatrix} = \begin{bmatrix} 0 & 0 & 0 & 0 & 0 & 0 & 1 \end{bmatrix}$$

A radio frame with a 10 ms length may be divided into two half frames with a 5 ms length. Referring to FIG. 4b, a description will be made of a slot in which SS/PBCH blocks are transmitted in each half frame. A slot in which the SS/PBCH block is transmitted may be any one of the cases A, B, C, D, and E. In the case A, the subcarrier spacing is 15 kHz and the starting time point of the SS/PBCH block is the ({2, 8} + 14*n)-th symbol. In this case, n = 0 or 1 at a carrier frequency of 3 GHz or less. In addition, it may be n = 0, 1, 2, 3 at carrier frequencies above 3 GHz and below 6 GHz. In the case B, the subcarrier spacing is 30 kHz and the starting time point of the SS/PBCH block is {4, 8, 16, 20} + 28*n. In this case, n = 0 at a carrier frequency of 3 GHz or less. In addition, it may be n = 0, 1 at carrier frequencies above 3 GHz and below 6 GHz. In the case C, the subcarrier spacing is 30 kHz and the starting time point of the SS/PBCH block is the ({2, 8} + 14*n)-th symbol. In this case, n = 0 or 1 at a carrier frequency of 3 GHz or less. In addition, it may be n = 0, 1, 2, 3 at carrier frequencies above 3 GHz and below 6 GHz. In the case D, the subcarrier spacing is 120 kHz and the starting time point of the SS/PBCH block is the ({4, 8, 16, 20} + 28*n)-th symbol. In this case, at a carrier frequency of 6 GHz or more, n = 0, 1, 2, 3, 5, 6, 7, 8, 10, 11, 12, 13, 15, 16, 17, 18. In the case E, the subcarrier spacing is 240 kHz and the starting time point of the SS/PBCH block is the ({8, 12, 16, 20, 32, 36, 40, 44} + 56*n)-th symbol. In this case, at a carrier frequency of 6 GHz or more, n = 0, 1, 2, 3, 5, 6, 7, 8.

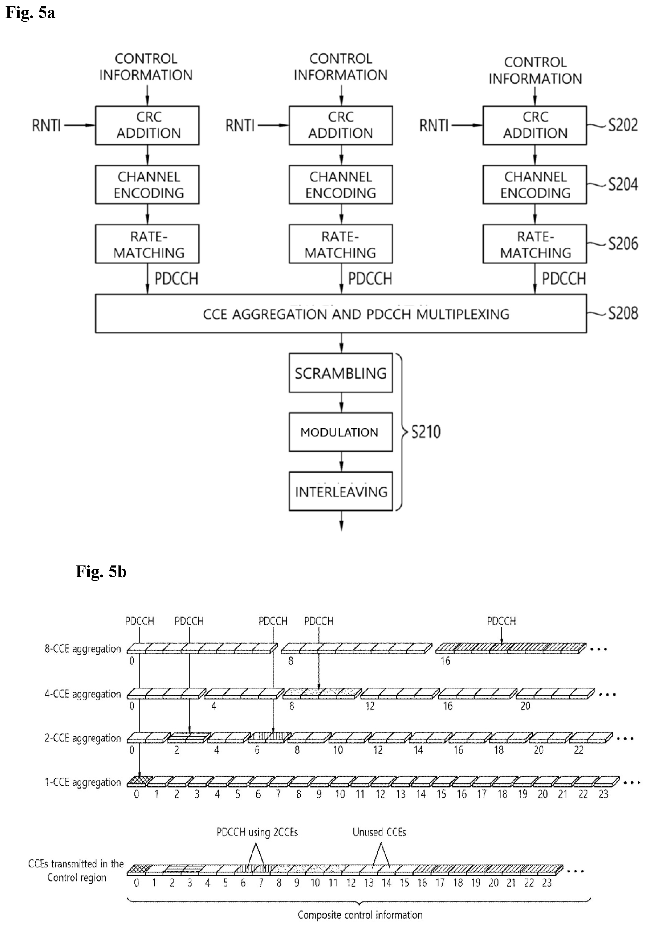

FIG. 5a and 5b illustrate a procedure for transmitting control information and a control channel in a 3GPP NR system. Referring to FIG. 5a, the base station may add a cyclic redundancy check (CRC) masked (e.g., an XOR operation) with a radio network temporary identifier (RNTI) to control information (e.g., downlink control information (DCI)) (S202). The base station may scramble the CRC with an RNTI value determined according to the purpose/target of each control information. The common RNTI used by one or more UEs can include at least one of a system information RNTI (SI-RNTI), a paging RNTI (P-RNTI), a random access RNTI (RA-RNTI), and a transmit power control RNTI (TPC-RNTI). In addition, the UE-specific RNTI may include at least one of a cell temporary RNTI (C-RNTI), and the CS-RNTI. Thereafter, the base station may perform rate-matching (S206) according to the amount of resource(s) used for PDCCH transmission after performing channel encoding (e.g., polar coding) (S204). Thereafter, the base station may multiplex the DCI(s) based on the control channel element (CCE) based PDCCH structure (S208). In addition, the base station may apply an additional process (S210) such as scrambling, modulation (e.g., QPSK), interleaving, and the like to the multiplexed DCI(s), and then map the DCI(s) to the resource to be transmitted. The CCE is a basic resource unit for the PDCCH, and one CCE may include a plurality (e.g., 6) of resource element groups (REGs). One REG may be configured with a plurality (e.g., 12) of REs. The number of CCEs used for one PDCCH may be defined as an aggregation level. In the 3GPP NR system, an

aggregation level of 1, 2, 4, 8, or 16 may be used. FIG. 5b is a diagram related to a CCE aggregation level and the multiplexing of a PDCCH and illustrates the type of a CCE aggregation level used for one PDCCH and CCE(s) transmitted in the control area according thereto.

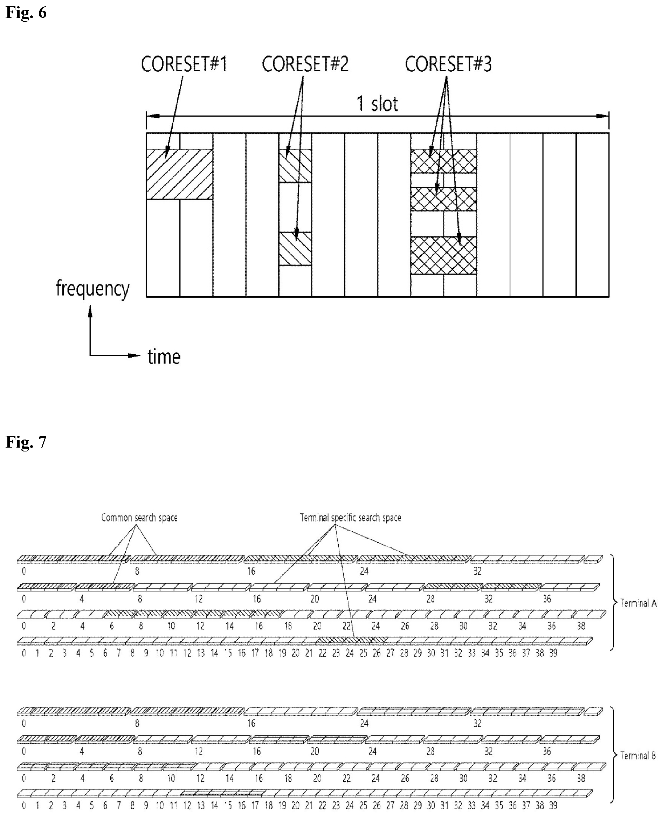

FIG. 6 illustrates a control resource set (CORESET) in which a physical downlink control channel (PDCCH) may be transmitted in a 3GPP NR system.

The CORESET is a time-frequency resource in which PDCCH, that is, a control signal for the UE, is transmitted. In addition, a search space to be described later may be mapped to one CORESET. Therefore, the UE may monitor the time-frequency domain designated as CORESET instead of monitoring all frequency bands for PDCCH reception, and decode the PDCCH mapped to CORESET. The base station may configure one or more CORESETs for each cell to the UE. The CORESET may be configured with up to three consecutive symbols on the time axis. In addition, the CORESET may be configured in units of six consecutive PRBs on the frequency axis. In the embodiment of FIG. 6, CORESET#1 is configured with consecutive PRBs, and CORESET#2 and CORESET#3 are configured with discontinuous PRBs. The CORESET can be located in any symbol in the slot. For example, in the embodiment of FIG. 5, CORESET#1 starts at the first symbol of the slot, CORESET#2 starts at the fifth symbol of the slot, and CORESET#9 starts at the ninth symbol of the slot.

FIG. 7 illustrates a method for setting a PDCCH search space in a 3GPP NR system.

In order to transmit the PDCCH to the UE, each CORESET may have at least one search space. In the embodiment of the present disclosure, the search space is a set of all time-frequency resources (hereinafter, PDCCH candidates) through which the PDCCH of the UE is capable of being transmitted. The search space may include a common search space that the UE of the 3GPP NR is required to commonly search and a Terminal-specific or a UE-specific search space that a specific UE is required to search. In the common search space, UE may monitor the PDCCH that is set so that all UEs in the cell belonging to the same base station commonly search. In addition, the UE-specific search space may be set for each UE so that UEs monitor the PDCCH allocated to each UE at different search space position according to the UE. In the case of the UE-specific search space, the search space between the UEs may be partially overlapped and allocated due to the limited control area in which the PDCCH may be allocated. Monitoring the PDCCH includes blind decoding for PDCCH candidates in the search space. When the blind decoding is successful, it may be expressed that the PDCCH is (successfully) detected/received and when the blind decoding fails, it may be expressed that the PDCCH is not detected/not received, or is not successfully detected/received.

For convenience of explanation, a PDCCH scrambled with a group common (GC) RNTI previously known to UEs so as to transmit DL control information to the one or more UEs is referred to as a group common (GC) PDCCH or a common PDCCH. In addition, a PDCCH scrambled with a specific-terminal RNTI that a specific UE already knows so as to transmit UL scheduling information or DL scheduling information to the specific UE is referred to as a specific-UE PDCCH. The common PDCCH may be included in a common search space, and the UE-specific PDCCH may be included in a common search space or a UE-specific PDCCH.

The base station may signal each UE or UE group through a PDCCH about information (i.e., DL Grant) related to resource allocation of a paging channel (PCH) and a downlink-shared channel (DL-SCH) that are a transmission channel or information (i.e., UL grant) related to resource allocation of a uplink-shared channel (UL-SCH) and a hybrid automatic repeat request (HARQ). The base station may transmit the PCH transport block and the DL-SCH transport block through the PDSCH. The base station may transmit data excluding specific control information or specific service data through the PDSCH. In addition, the UE may receive data excluding specific control information or specific service data through the PDSCH.

The base station may include, in the PDCCH, information on to which UE (one or a plurality of UEs) PDSCH data is transmitted and how the PDSCH data is to be received and decoded by the corresponding UE, and transmit the PDCCH. For example, it is assumed that the DCI transmitted on a specific PDCCH is CRC masked with an RNTI of "A", and the DCI indicates that PDSCH is allocated to a radio resource (e.g., frequency location) of "B" and indicates transmission format information (e.g., transport block size, modulation scheme, coding information, etc.) of "C". The UE monitors the PDCCH using the RNTI information that the UE has. In this case, if there is a UE which performs blind decoding the PDCCH using the "A" RNTI, the UE receives the PDCCH, and receives the PDSCH indicated by "B" and "C" through the received PDCCH information.

Table 2 shows an embodiment of a physical uplink control channel (PUCCH) used in a wireless communication system.

[Table 2]

| PUCCH format | Length in OFDM symbols | Number of bits |
|---|---|---|
| 0 | 1 - 2 | ≤2 |
| 1 | 4 - 14 | ≤2 |

(continued)

| PUCCH format | Length in OFDM symbols | Number of bits |
|---|---|---|
| 2 | 1 - 2 | >2 |
| 3 | 4 - 14 | >2 |
| 4 | 4 - 14 | >2 |

PUCCH may be used to transmit the following UL control information (UCI).

- Scheduling Request (SR): Information used for requesting a UL UL-SCH resource.
- HARQ-ACK: A Response to PDCCH (indicating DL SPS release) and/or a response to DL transport block (TB) on PDSCH. HARQ-ACK indicates whether information transmitted on the PDCCH or PDSCH is received. The HARQ-ACK response includes positive ACK (simply ACK), negative ACK (hereinafter NACK), Discontinuous Transmission (DTX), or NACK/DTX. Here, the term HARQ-ACK is used mixed with HARQ-ACK/NACK and ACK/NACK. In general, ACK may be represented by bit value 1 and NACK may be represented by bit value 0.
- Channel State Information (CSI): Feedback information on the DL channel. The UE generates it based on the CSI-Reference Signal (RS) transmitted by the base station. Multiple Input Multiple Output (MIMO)-related feedback information includes a Rank Indicator (RI) and a Precoding Matrix Indicator (PMI). CSI can be divided into CSI part 1 and CSI part 2 according to the information indicated by CSI.

In the 3GPP NR system, five PUCCH formats may be used to support various service scenarios, various channel environments, and frame structures.

PUCCH format 0 is a format capable of transmitting 1-bit or 2-bit HARQ-ACK information or SR. PUCCH format 0 can be transmitted through one or two OFDM symbols on the time axis and one PRB on the frequency axis. When PUCCH format 0 is transmitted in two OFDM symbols, the same sequence to the two symbols may be transmitted through different RBs. In this case, the sequence may be a cyclic shift (CS) sequence from the base sequence used for PUCCH format 0. Through this, the UE can obtain a frequency diversity gain. Specifically, the UE may determine a cyclic shift (CS) value $m_{cs}$ according to the $M_{bit}$ bit UCI ($M_{bit}$ = 1 or 2). In addition, a sequence in which a base sequence of length 12 is cyclically shifted based on a predetermined CS value $m_{cs}$ may be mapped to 1 OFDM symbol and 12 REs of 1 RB and transmitted. When the number of cyclic shifts available to the UE is 12 and $M_{bit}$ = 1, 1 bit UCI 0 and 1 may be mapped to two cyclic shifted sequences having a difference of 6 cyclic shift values, respectively. In addition, when $M_{bit}$ = 2, 2bits UCI 00, 01, 11, and 10 may be mapped to four cyclic shifted sequences in which the difference in cyclic shift values is 3, respectively.

PUCCH format 1 may deliver 1-bit or 2-bit HARQ-ACK information or SR. PUCCH format 1 may be transmitted through consecutive OFDM symbols on the time axis and one PRB on the frequency axis. Here, the number of OFDM symbols occupied by PUCCH format 1 may be one of 4 to 14. More specifically, UCI, which is $M_{bit}$ = 1, may be BPSK-modulated. The UE may modulate UCI, which is $M_{bit}$ = 2, with quadrature phase shift keying (QPSK). A signal is obtained by multiplying a modulated complex valued symbol d(0) by a sequence of length 12. In this case, the sequence may be a base sequence used for PUCCH format 0. The UE spreads the even-numbered OFDM symbols to which PUCCH format 1 is allocated through the time axis orthogonal cover code (OCC) to transmit the obtained signal. PUCCH format 1 determines the maximum number of different UEs multiplexed in the one RB according to the length of the OCC to be used. A demodulation reference signal (DMRS) may be spread with OCC and mapped to the odd-numbered OFDM symbols of PUCCH format 1.

PUCCH format 2 may deliver UCI exceeding 2 bits. PUCCH format 2 may be transmitted through one or two OFDM symbols on the time axis and one or a plurality of RBs on the frequency axis. When PUCCH format 2 is transmitted in two OFDM symbols, the sequences which are transmitted in different RBs through the two OFDM symbols may be same each other. Here, the sequence may be a plurality of modulated complex valued symbols d(0),..., d( $M_{symbol}$ -1). Here, $M_{symbol}$ may be $M_{bit}$/2. Through this, the UE may obtain a frequency diversity gain. More specifically, $M_{bit}$bit UCI ($M_{bit}$>2) is bit-level scrambled, QPSK modulated, and mapped to RB(s) of one or two OFDM symbol(s). Here, the number of RBs may be one of 1 to 16.

PUCCH format 3 or PUCCH format 4 may deliver UCI exceeding 2 bits. PUCCH format 3 or PUCCH format 4 may be transmitted through consecutive OFDM symbols on the time axis and one PRB on the frequency axis. The number of OFDM symbols occupied by PUCCH format 3 or PUCCH format 4 may be one of 4 to 14. Specifically, the UE modulates $M_{bit}$bits UCI ($M_{bit}$> 2) with $\pi$/2-Binary Phase Shift Keying (BPSK) or QPSK to generate a complex valued symbol d(0) to d(Msymb-1). Here, when using $\pi$/2-BPSK, $M_{symb}$ = $M_{bit}$, and when using QPSK, $M_{symb}$ = $M_{bit}$/2. The UE may not apply block-unit spreading to the PUCCH format 3. However, the UE may apply block-unit spreading to one RB (i.e., 12 subcarriers) using PreDFT-OCC of a length of 12 such that PUCCH format 4 may have two or four multiplexing capacities. The UE performs transmit precoding (or DFT-precoding) on the spread signal and maps it to each RE to transmit the

spread signal.

In this case, the number of RBs occupied by PUCCH format 2, PUCCH format 3, or PUCCH format 4 may be determined according to the length and maximum code rate of the UCI transmitted by the UE. When the UE uses PUCCH format 2, the UE may transmit HARQ-ACK information and CSI information together through the PUCCH. When the number of RBs that the UE may transmit is greater than the maximum number of RBs that PUCCH format 2, or PUCCH format 3, or PUCCH format 4 may use, the UE may transmit only the remaining UCI information without transmitting some UCI information according to the priority of the UCI information.

PUCCH format 1, PUCCH format 3, or PUCCH format 4 may be configured through the RRC signal to indicate frequency hopping in a slot. When frequency hopping is configured, the index of the RB to be frequency hopped may be configured with an RRC signal. When PUCCH format 1, PUCCH format 3, or PUCCH format 4 is transmitted through N OFDM symbols on the time axis, the first hop may have floor (N/2) OFDM symbols and the second hop may have ceiling(N/2) OFDM symbols.

PUCCH format 1, PUCCH format 3, or PUCCH format 4 may be configured to be repeatedly transmitted in a plurality of slots. In this case, the number K of slots in which the PUCCH is repeatedly transmitted may be configured by the RRC signal. The repeatedly transmitted PUCCHs must start at an OFDM symbol of the constant position in each slot, and have the constant length. When one OFDM symbol among OFDM symbols of a slot in which a UE should transmit a PUCCH is indicated as a DL symbol by an RRC signal, the UE may not transmit the PUCCH in a corresponding slot and delay the transmission of the PUCCH to the next slot to transmit the PUCCH.

Meanwhile, in the 3GPP NR system, the UE may perform transmission/reception using a bandwidth less than or equal to the bandwidth of the carrier (or cell). To this end, the UE may be configured with a bandwidth part (BWP) consisting of a continuous bandwidth of a portion of the bandwidth of the carrier. A UE operating according to TDD or operating in an unpaired spectrum may receive up to four DL/UL BWP pairs for one carrier (or cell). In addition, the UE may activate one DL/UL BWP pair. A UE operating according to FDD or operating in a paired spectrum may receive up to 4 DL BWPs on a downlink carrier (or cell) and up to 4 UL BWPs on an uplink carrier (or cell). The UE may activate one DL BWP and UL BWP for each carrier (or cell). The UE may not receive or transmit in time-frequency resources other than the activated BWP. The activated BWP may be referred to as an active BWP.

The base station may indicate an activated BWP among the BWPs configured by the UE through downlink control information (DCI). The BWP indicated through DCI is activated, and other configured BWP(s) are deactivated. In a carrier (or cell) operating in TDD, the base station may include a bandwidth part indicator (BPI) indicating the BWP activated in the DCI scheduling the PDSCH or PUSCH to change the DL/UL BWP pair of the UE. The UE may receive a DCI scheduling a PDSCH or a PUSCH and may identify a DL/UL BWP pair activated based on the BPI. In the case of a downlink carrier (or cell) operating in FDD, the base station may include a BPI indicating the activated BWP in the DCI scheduling the PDSCH to change the DL BWP of the UE. In the case of an uplink carrier (or cell) operating in FDD, the base station may include a BPI indicating the activated BWP in the DCI scheduling the PUSCH to change the UL BWP of the UE.

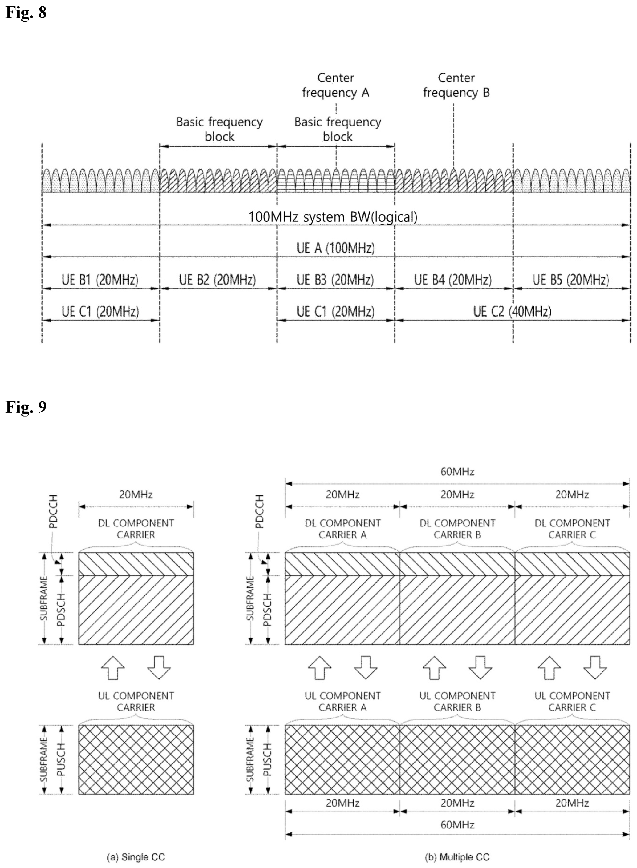

FIG. 8 is a conceptual diagram illustrating carrier aggregation.

The carrier aggregation is a method in which the UE uses a plurality of frequency blocks or cells (in the logical sense) configured with UL resources (or component carriers) and/or DL resources (or component carriers) as one large logical frequency band in order for a wireless communication system to use a wider frequency band. One component carrier may also be referred to as a term called a Primary cell (PCell) or a Secondary cell (SCell), or a Primary SCell (PScell). However, hereinafter, for convenience of description, the term "component carrier" is used.

Referring to FIG. 8, as an example of a 3GPP NR system, the entire system band may include up to 16 component carriers, and each component carrier may have a bandwidth of up to 400 MHz. The component carrier may include one or more physically consecutive subcarriers. Although it is shown in FIG. 8 that each of the component carriers has the same bandwidth, this is merely an example, and each component carrier may have a different bandwidth. Also, although each component carrier is shown as being adjacent to each other in the frequency axis, the drawings are shown in a logical concept, and each component carrier may be physically adjacent to one another, or may be spaced apart.

Different center frequencies may be used for each component carrier. Also, one common center frequency may be used in physically adjacent component carriers. Assuming that all the component carriers are physically adjacent in the embodiment of FIG. 8, center frequency A may be used in all the component carriers. Further, assuming that the respective component carriers are not physically adjacent to each other, center frequency A and the center frequency B can be used in each of the component carriers.

When the total system band is extended by carrier aggregation, the frequency band used for communication with each UE can be defined in units of a component carrier. UE A may use 100 MHz, which is the total system band, and performs communication using all five component carriers. UEs B1~B5 can use only a 20 MHz bandwidth and perform communication using one component carrier. UEs C1 and C2 may use a 40 MHz bandwidth and perform communication using two component carriers, respectively. The two component carriers may be logically/physically adjacent or non-adjacent. UE C1 represents the case of using two non-adjacent component carriers, and UE C2 represents the case of using two adjacent component carriers.

FIG. 9 is a drawing for explaining single carrier communication and multiple carrier communication. Particularly, FIG. 9(a) shows a single carrier subframe structure and FIG. 9(b) shows a multi-carrier subframe structure.

Referring to FIG. 9(a), in an FDD mode, a general wireless communication system may perform data transmission or reception through one DL band and one UL band corresponding thereto. In another specific embodiment, in a TDD mode, the wireless communication system may divide a radio frame into a UL time unit and a DL time unit in a time domain, and perform data transmission or reception through a UL/DL time unit. Referring to FIG. 9(b), three 20 MHz component carriers (CCs) can be aggregated into each of UL and DL, so that a bandwidth of 60 MHz can be supported. Each CC may be adjacent or non-adjacent to one another in the frequency domain. FIG. 9(b) shows a case where the bandwidth of the UL CC and the bandwidth of the DL CC are the same and symmetric, but the bandwidth of each CC can be determined independently. In addition, asymmetric carrier aggregation with different number of UL CCs and DL CCs is possible. A DL/UL CC allocated/configured to a specific UE through RRC may be called as a serving DL/UL CC of the specific UE.

The base station may perform communication with the UE by activating some or all of the serving CCs of the UE or deactivating some CCs. The base station can change the CC to be activated/deactivated, and change the number of CCs to be activated/deactivated. If the base station allocates a CC available for the UE as to be cell-specific or UE-specific, at least one of the allocated CCs cannot be deactivated, unless the CC allocation for the UE is completely reconfigured or the UE is handed over. One CC that is not deactivated by the UE is called as a Primary CC (PCC) or a primary cell (PCell), and a CC that the base station can freely activate/deactivate is called as a Secondary CC (SCC) or a secondary cell (SCell).

Meanwhile, 3GPP NR uses the concept of a cell to manage radio resources. A cell is defined as a combination of DL resources and UL resources, that is, a combination of DL CC and UL CC. A cell may be configured with DL resources alone, or a combination of DL resources and UL resources. When the carrier aggregation is supported, the linkage between the carrier frequency of the DL resource (or DL CC) and the carrier frequency of the UL resource (or UL CC) may be indicated by system information. The carrier frequency refers to the center frequency of each cell or CC. A cell corresponding to the PCC is referred to as a PCell, and a cell corresponding to the SCC is referred to as an SCell. The carrier corresponding to the PCell in the DL is the DL PCC, and the carrier corresponding to the PCell in the UL is the UL PCC. Similarly, the carrier corresponding to the SCell in the DL is the DL SCC and the carrier corresponding to the SCell in the UL is the UL SCC. According to UE capability, the serving cell(s) may be configured with one PCell and zero or more SCells. In the case of UEs that are in the RRC_CONNECTED state but not configured for carrier aggregation or that do not support carrier aggregation, there is only one serving cell configured only with PCell.

As mentioned above, the term "cell" used in carrier aggregation is distinguished from the term "cell" which refers to a certain geographical area in which a communication service is provided by one base station or one antenna group. That is, one component carrier may also be referred to as a scheduling cell, a scheduled cell, a primary cell (PCell), a secondary cell (SCell), or a primary SCell (PScell). However, in order to distinguish between a cell referring to a certain geographical area and a cell of carrier aggregation, in the present disclosure, a cell of a carrier aggregation is referred to as a CC, and a cell of a geographical area is referred to as a cell.

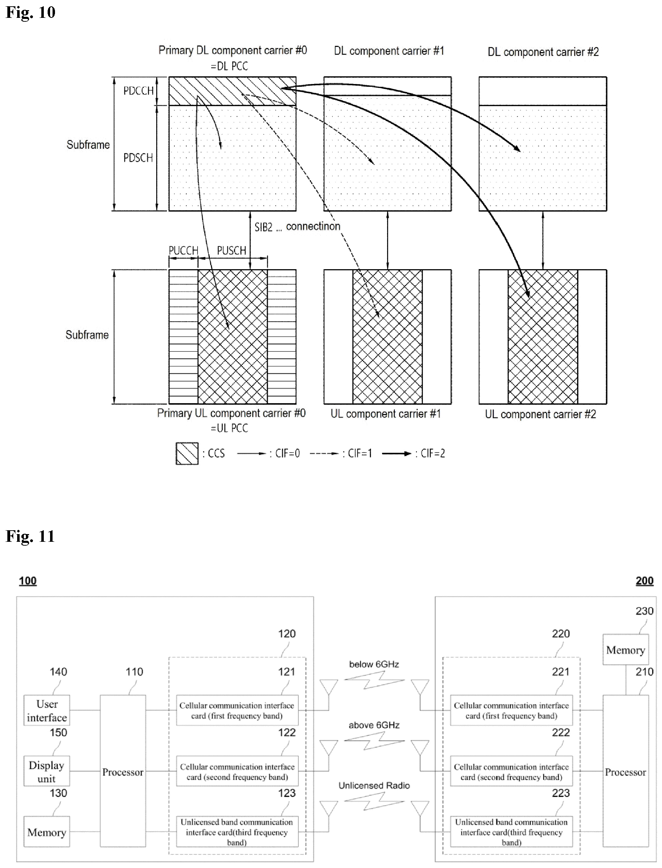

FIG. 10 is a diagram showing an example in which a cross carrier scheduling technique is applied. When cross carrier scheduling is set, the control channel transmitted through the first CC may schedule a data channel transmitted through the first CC or the second CC using a carrier indicator field (CIF). The CIF is included in the DCI. In other words, a scheduling cell is set, and the DL grant/UL grant transmitted in the PDCCH area of the scheduling cell schedules the PDSCH/PUSCH of the scheduled cell. That is, a search area for the plurality of component carriers exists in the PDCCH area of the scheduling cell. A PCell may be basically a scheduling cell, and a specific SCell may be designated as a scheduling cell by an upper layer.

In the embodiment of FIG. 10, it is assumed that three DL CCs are merged. Here, it is assumed that DL component carrier #0 is DL PCC (or PCell), and DL component carrier #1 and DL component carrier #2 are DL SCCs (or SCell). In addition, it is assumed that the DL PCC is set to the PDCCH monitoring CC. When cross-carrier scheduling is not configured by UE-specific (or UE-group-specific or cell-specific) higher layer signaling, a CIF is disabled, and each DL CC can transmit only a PDCCH for scheduling its PDSCH without the CIF according to an NR PDCCH rule (non-cross-carrier scheduling, self-carrier scheduling). Meanwhile, if cross-carrier scheduling is configured by UE-specific (or UE-group-specific or cell-specific) higher layer signaling, a CIF is enabled, and a specific CC (e.g., DL PCC) may transmit not only the PDCCH for scheduling the PDSCH of the DL CC A using the CIF but also the PDCCH for scheduling the PDSCH of another CC (cross-carrier scheduling). On the other hand, a PDCCH is not transmitted in another DL CC. Accordingly, the UE monitors the PDCCH not including the CIF to receive a self-carrier scheduled PDSCH depending on whether the cross-carrier scheduling is configured for the UE, or monitors the PDCCH including the CIF to receive the cross-carrier scheduled PDSCH.

On the other hand, FIGS. 9 and 10 illustrate the subframe structure of the 3GPP LTE-A system, and the same or similar configuration may be applied to the 3GPP NR system. However, in the 3GPP NR system, the subframes of FIGS. 9 and 10 may be replaced with slots.

FIG. 11 is a block diagram showing the configurations of a UE and a base station according to an embodiment of

the present disclosure.

In an embodiment of the present disclosure, the UE may be implemented with various types of wireless communication devices or computing devices that are guaranteed to be portable and mobile. The UE may be referred to as a User Equipment (UE), a Station (STA), a Mobile Subscriber (MS), or the like. In addition, in an embodiment of the present disclosure, the base station controls and manages a cell (e.g., a macro cell, a femto cell, a pico cell, etc.) corresponding to a service area, and performs functions of a signal transmission, a channel designation, a channel monitoring, a self diagnosis, a relay, or the like. The base station may be referred to as next Generation NodeB (gNB) or Access Point (AP).

As shown in the drawing, a UE 100 according to an embodiment of the present disclosure may include a processor 110, a communication module 120, a memory 130, a user interface 140, and a display unit 150.

First, the processor 110 may execute various instructions or programs and process data within the UE 100. In addition, the processor 110 may control the entire operation including each unit of the UE 100, and may control the transmission/reception of data between the units. Here, the processor 110 may be configured to perform an operation according to the embodiments described in the present disclosure. For example, the processor 110 may receive slot configuration information, determine a slot configuration based on the slot configuration information, and perform communication according to the determined slot configuration.

Next, the communication module 120 may be an integrated module that performs wireless communication using a wireless communication network and a wireless LAN access using a wireless LAN. For this, the communication module 120 may include a plurality of network interface cards (NICs) such as cellular communication interface cards 121 and 122 and an unlicensed band communication interface card 123 in an internal or external form. In the drawing, the communication module 120 is shown as an integral integration module, but unlike the drawing, each network interface card can be independently arranged according to a circuit configuration or usage.

The cellular communication interface card 121 may transmit or receive a radio signal with at least one of the base station 200, an external device, and a server by using a mobile communication network and provide a cellular communication service in a first frequency band based on the instructions from the processor 110. According to an embodiment, the cellular communication interface card 121 may include at least one NIC module using a frequency band of less than 6 GHz. At least one NIC module of the cellular communication interface card 121 may independently perform cellular communication with at least one of the base station 200, an external device, and a server in accordance with cellular communication standards or protocols in the frequency bands below 6 GHz supported by the corresponding NIC module.

The cellular communication interface card 122 may transmit or receive a radio signal with at least one of the base station 200, an external device, and a server by using a mobile communication network and provide a cellular communication service in a second frequency band based on the instructions from the processor 110. According to an embodiment, the cellular communication interface card 122 may include at least one NIC module using a frequency band of more than 6 GHz. At least one NIC module of the cellular communication interface card 122 may independently perform cellular communication with at least one of the base station 200, an external device, and a server in accordance with cellular communication standards or protocols in the frequency bands of 6 GHz or more supported by the corresponding NIC module.

The unlicensed band communication interface card 123 transmits or receives a radio signal with at least one of the base station 200, an external device, and a server by using a third frequency band which is an unlicensed band, and provides an unlicensed band communication service based on the instructions from the processor 110. The unlicensed band communication interface card 123 may include at least one NIC module using an unlicensed band. For example, the unlicensed band may be a band of 2.4 GHz, 5 GHz, 6GHz, 7GHz, or above 52.6GHz. At least one NIC module of the unlicensed band communication interface card 123 may independently or dependently perform wireless communication with at least one of the base station 200, an external device, and a server according to the unlicensed band communication standard or protocol of the frequency band supported by the corresponding NIC module.

The memory 130 stores a control program used in the UE 100 and various kinds of data therefor. Such a control program may include a prescribed program required for performing wireless communication with at least one among the base station 200, an external device, and a server.

Next, the user interface 140 includes various kinds of input/output means provided in the UE 100. In other words, the user interface 140 may receive a user input using various input means, and the processor 110 may control the UE 100 based on the received user input. In addition, the user interface 140 may perform an output based on instructions from the processor 110 using various kinds of output means.

Next, the display unit 150 outputs various images on a display screen. The display unit 150 may output various display objects such as content executed by the processor 110 or a user interface based on control instructions from the processor 110.

In addition, the base station 200 according to an embodiment of the present disclosure may include a processor 210, a communication module 220, and a memory 230.

First, the processor 210 may execute various instructions or programs, and process internal data of the base

station 200. In addition, the processor 210 may control the entire operations of units in the base station 200, and control data transmission and reception between the units. Here, the processor 210 may be configured to perform operations according to embodiments described in the present disclosure. For example, the processor 210 may signal slot configuration and perform communication according to the signaled slot configuration.

Next, the communication module 220 may be an integrated module that performs wireless communication using a wireless communication network and a wireless LAN access using a wireless LAN. For this, the communication module 220 may include a plurality of network interface cards such as cellular communication interface cards 221 and 222 and an unlicensed band communication interface card 223 in an internal or external form. In the drawing, the communication module 220 is shown as an integral integration module, but unlike the drawing, each network interface card can be independently arranged according to a circuit configuration or usage.

The cellular communication interface card 221 may transmit or receive a radio signal with at least one of the UE 100, an external device, and a server by using a mobile communication network and provide a cellular communication service in the first frequency band based on the instructions from the processor 210. According to an embodiment, the cellular communication interface card 221 may include at least one NIC module using a frequency band of less than 6 GHz. The at least one NIC module of the cellular communication interface card 221 may independently perform cellular communication with at least one of the UE 100, an external device, and a server in accordance with the cellular communication standards or protocols in the frequency bands less than 6 GHz supported by the corresponding NIC module.

The cellular communication interface card 222 may transmit or receive a radio signal with at least one of the UE 100, an external device, and a server by using a mobile communication network and provide a cellular communication service in the second frequency band based on the instructions from the processor 210. According to an embodiment, the cellular communication interface card 222 may include at least one NIC module using a frequency band of 6 GHz or more. The at least one NIC module of the cellular communication interface card 222 may independently perform cellular communication with at least one of the UE 100, an external device, and a server in accordance with the cellular communication standards or protocols in the frequency bands 6 GHz or more supported by the corresponding NIC module.

The unlicensed band communication interface card 223 transmits or receives a radio signal with at least one of the UE 100, an external device, and a server by using the third frequency band which is an unlicensed band, and provides an unlicensed band communication service based on the instructions from the processor 210. The unlicensed band communication interface card 223 may include at least one NIC module using an unlicensed band. For example, the unlicensed band may be a band of 2.4 GHz, 5 GHz, 6GHz, 7GHz, or above 52.6GHz. At least one NIC module of the unlicensed band communication interface card 223 may independently or dependently perform wireless communication with at least one of the UE 100, an external device, and a server according to the unlicensed band communication standards or protocols of the frequency band supported by the corresponding NIC module.

FIG. 11 is a block diagram illustrating the UE 100 and the base station 200 according to an embodiment of the present disclosure, and blocks separately shown are logically divided elements of a device. Accordingly, the aforementioned elements of the device may be mounted in a single chip or a plurality of chips according to the design of the device. In addition, a part of the configuration of the UE 100, for example, a user interface 140, a display unit 150 and the like may be selectively provided in the UE 100. In addition, the user interface 140, the display unit 150 and the like may be additionally provided in the base station 200, if necessary.

A slot format may be configured for the UE by the base station in a TDD or unpaired spectrum system. The slot format may refer to the type of symbols in the slot. The symbol type may be at least one of a downlink symbol (DL symbol), an uplink symbol (UL symbol), or a flexible symbol. A symbol type of a slot in a radio frame may be configured for the UE by the base station. The flexible symbol may refer to a symbol that is not configured as a downlink symbol or an uplink symbol.

The UE may be semi-statically configured with information about the type of each symbol in the slot by receiving information about the type of each symbol in the slot from the base station through a cell-specific or cell-common radio resource control (RRC) signal. Here, the cell-specific (or, cell-common or UE-common) RRC signal includes tdd-UL-DL-ConfigurationCommon. Further, the UE may be semi-statically configured with information about the type of each symbol in the slot by receiving information about the type of each symbol in the slot from the base station through a SIB1. Furthermore, the UE may semi-statically configured with information about the type of each symbol in the slot from the base station by receiving information about the type of each symbol in the slot from the base station through a UE-specific or UE-dedicated RRC signal. The base station may configure/set the type of each symbol in the slot for the UE by using the information about the type of each symbol in the slot.

When the UE receives the information on the type of each symbol in the slot from the base station through the cell-specific RRC signal, the information configured by the cell-specific RRC signal may include at least one among 1) the period of cell-specific slot configuration, 2) the number of slots including only DL symbols, starting from a start slot of the period, 3) the number of DL symbols, starting from the first symbol of a slot immediately following the last slot including only DL symbols, 4) the number of slots including only UL symbols from the last slot of the period, and 5) the number of UL symbols in a slot immediately preceding the last slot including only uplink symbols (in the backward direction from the last

slot of the period). Here, a symbol that is not configured as a DL symbol or a UL symbol is a flexible symbol. In addition, when the UE receives the information about the type of each symbol in a slot from the base station through a cell-specific RRC signal, the information about the type of each symbol may include up to two slot patterns. In this case, the two patterns may be applied successively to symbols in the time domain. A DL symbol, a UL symbol, and a flexible symbol configured based on a cell-specific RRC signal or SIB1 may be referred to as a cell-specific DL symbol, a cell-specific UL symbol, and a cell-specific flexible symbol, respectively.

When the UE receives the information about type of each symbol in a slot from the base station through a UE-specific RRC signal, a cell-specific flexible symbol may be configured as a DL symbol or a UL symbol by the UE-specific RRC signal. Here, the UE-specific RRC signal includes tdd-UL-DL-ConfigurationDedicated. In this case, the information configured by the UE-specific RRC signal may include at least one among 1) an index of a slot within a slot configuration period, 2) the number of DL symbols from the first symbol of the slot indicated by the index, and 3) the number of UL symbols from the last symbol of the slot indicated by the index. Here, a symbol that is not configured as a DL symbol or a UL symbol is a flexible symbol. In addition, the UE may be configured such that all symbols in the slot are DL symbols, or may be configured such that all symbols in the slot are UL symbols. A DL symbol, a UL symbol, and a flexible symbol configured based on the UE-specific RRC signal may be referred to as a UE-specific DL symbol, a UE-specific UL symbol, and a UE-specific flexible symbol, respectively.

The base station may transmit information about the slot format to the UE via a slot format indicator (SFI) in DCI format 2_0 contained in a group common (GC)-PDCCH. The GC-PDCCH may be CRC-scrambled with SFI-RNTI for UEs receiving the information about the slot format. Hereinafter, an SFI transmitted via a GC-PDCCH may be described as a dynamic SFI.

The UE may receive a dynamic SFI through GC-PDCCH to receive indication of whether symbols in a slot are cell-specific flexible symbols or UE-specific flexible symbols, downlink symbols, uplink symbols, or flexible symbols. In other words, only a flexible symbol semi-statically configured for the UE may be indicated as one of a downlink symbol, an uplink symbol, and a flexible symbol via a dynamic SFI. The UE may not expect that a semi-statically configured downlink symbol or uplink symbol will be indicated as a different type of symbol by the dynamic SFI. The UE may perform blind decoding at each monitoring period configured by the base station to receive a GC-PDCCH transmitting DCI format 2_0 including the dynamic SFI. When the UE successfully receives the GC-PDCCH by performing the blind decoding, the UE may apply information about a slot format indicated by the dynamic SFI, starting from a slot in which the GC-PDCCH has been received.

A combination of slot formats that can be indicated through a dynamic SFI may be configured for the UE by the base station. The slot format combination may be for each of 1 to 256 slots, and a slot format combination for one of the 1 to 256 slots may be configured for the UE through a dynamic SFI. The dynamic SFI may include an index indicating a slot to which the slot format combination is applied. Table 3 shows a slot format combination for each slot (see 3GPP TS38.213).

[Table 3]

| Format | Symbol number in a slot | | | | | | | | | | | | | |
|---|---|---|---|---|---|---|---|---|---|---|---|---|---|---|
| | 0 | 1 | 2 | 3 | 4 | 5 | 6 | 7 | 8 | 9 | 10 | 11 | 12 | 13 |
| 0 | D | D | D | D | D | D | D | D | D | D | D | D | D | D |
| 1 | U | U | U | U | U | U | U | U | U | U | U | U | U | U |
| 2 | F | F | F | F | F | F | F | F | F | F | F | F | F | F |
| 3 | D | D | D | D | D | D | D | D | D | D | D | D | D | F |
| 4 | D | D | D | D | D | D | D | D | D | D | D | D | F | F |
| 5 | D | D | D | D | D | D | D | D | D | D | D | F | F | F |
| 6 | D | D | D | D | D | D | D | D | D | D | F | F | F | F |
| 7 | D | D | D | D | D | D | D | D | D | F | F | F | F | F |
| 8 | F | F | F | F | F | F | F | F | F | F | F | F | F | U |
| 9 | F | F | F | F | F | F | F | F | F | F | F | F | U | U |
| 10 | F | U | U | U | U | U | U | U | U | U | U | U | U | U |
| 11 | F | F | U | U | U | U | U | U | U | U | U | U | U | U |
| 12 | F | F | F | U | U | U | U | U | U | U | U | U | U | U |
| 13 | F | F | F | F | U | U | U | U | U | U | U | U | U | U |
| 14 | F | F | F | F | F | U | U | U | U | U | U | U | U | U |
| 15 | F | F | F | F | F | F | U | U | U | U | U | U | U | U |
| 16 | D | F | F | F | F | F | F | F | F | F | F | F | F | F |
| 17 | D | D | F | F | F | F | F | F | F | F | F | F | F | F |
| 18 | D | D | D | F | F | F | F | F | F | F | F | F | F | F |
| 19 | D | F | F | F | F | F | F | F | F | F | F | F | F | U |
| 20 | D | D | F | F | F | F | F | F | F | F | F | F | F | U |
| 21 | D | D | D | F | F | F | F | F | F | F | F | F | F | U |
| 22 | D | F | F | F | F | F | F | F | F | F | F | F | U | U |
| 23 | D | D | F | F | F | F | F | F | F | F | F | F | U | U |
| 24 | D | D | D | F | F | F | F | F | F | F | F | F | U | U |
| 25 | D | F | F | F | F | F | F | F | F | F | F | U | U | U |
| 26 | D | D | F | F | F | F | F | F | F | F | F | U | U | U |
| 27 | D | D | D | F | F | F | F | F | F | F | F | U | U | U |
| 28 | D | D | D | D | D | D | D | D | D | D | D | D | F | U |
| 29 | D | D | D | D | D | D | D | D | D | D | D | F | F | U |
| 30 | D | D | D | D | D | D | D | D | D | D | F | F | F | U |
| 31 | D | D | D | D | D | D | D | D | D | D | D | F | U | U |
| 32 | D | D | D | D | D | D | D | D | D | D | F | F | U | U |
| 33 | D | D | D | D | D | D | D | D | D | F | F | F | U | U |
| 34 | D | F | U | U | U | U | U | U | U | U | U | U | U | U |
| 35 | D | D | F | U | U | U | U | U | U | U | U | U | U | U |
| 36 | D | D | D | F | U | U | U | U | U | U | U | U | U | U |
| 37 | D | F | F | U | U | U | U | U | U | U | U | U | U | U |
| 38 | D | D | F | F | U | U | U | U | U | U | U | U | U | U |
| 39 | D | D | D | F | F | U | U | U | U | U | U | U | U | U |
| 40 | D | F | F | F | U | U | U | U | U | U | U | U | U | U |
| 41 | D | D | F | F | F | U | U | U | U | U | U | U | U | U |
| 42 | D | D | D | F | F | F | U | U | U | U | U | U | U | U |
| 43 | D | D | D | D | D | D | D | D | D | F | F | F | F | U |
| 44 | D | D | D | D | D | D | F | F | F | F | F | F | U | U |
| 45 | D | D | D | D | D | D | F | F | U | U | U | U | U | U |
| 46 | D | D | D | D | D | F | U | D | D | D | D | D | F | U |
| 47 | D | D | F | U | U | U | U | D | D | F | U | U | U | U |
| 48 | D | F | U | U | U | U | U | D | F | U | U | U | U | U |
| 49 | D | D | D | D | F | F | U | D | D | D | D | F | F | U |
| 50 | D | D | F | F | U | U | U | D | D | F | F | U | U | U |
| 51 | D | F | F | U | U | U | U | D | F | F | U | U | U | U |
| 52 | D | F | F | F | F | F | U | D | F | F | F | F | F | U |
| 53 | D | D | F | F | F | F | U | D | D | F | F | F | F | U |
| 54 | F | F | F | F | F | F | F | D | D | D | D | D | D | D |
| 55 | D | D | F | F | F | U | U | U | D | D | D | D | D | D |
| 56 – 254 | Reserved | | | | | | | | | | | | | |
| 255 | UE determines the slot format for the slot based on *tdd-UL-DL-ConfigurationCommon*, or *tdd-UL-DL-ConfigurationDedicated* and, if any, on detected DCI formats | | | | | | | | | | | | | |

In Table 3, D denotes a downlink symbol, U denotes an uplink symbol, and F denotes a flexible symbol. As shown in Table 3, DL/UL switching may be allowed up to two times within a slot.

In the present specification, the terms "configuration", "setting", and "indication" may be used interchangeably. That is, the terms "configured", "set", and "indicated" may have the same meaning, and similarly, the terms "is configured", "is set", and "is indicated" may have the same meaning.

Subband-based full duplex: Spectrum partitioning

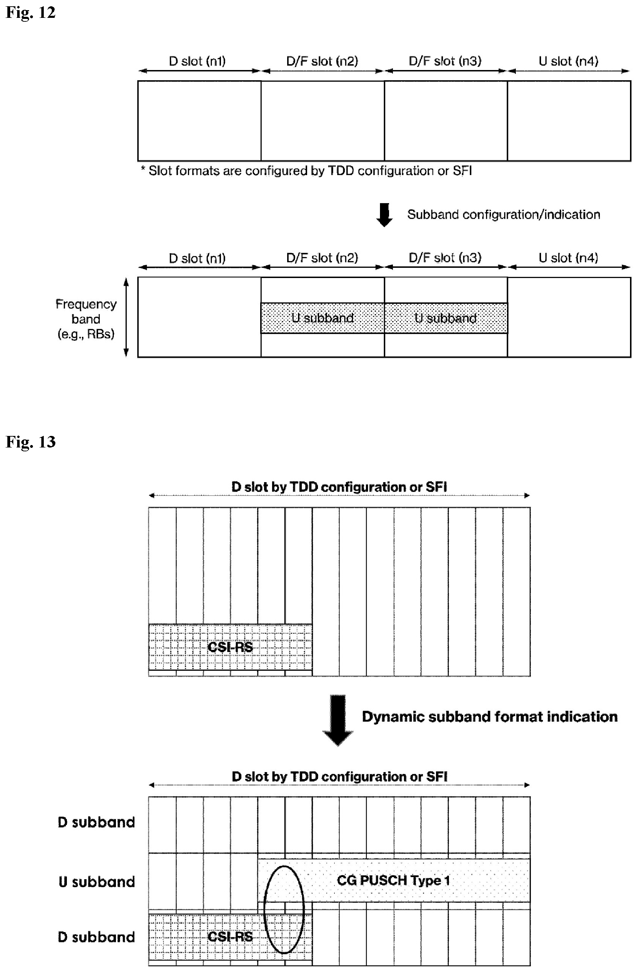

FIG. 12 to 13 illustrate a subband configuration method according to an embodiment of the present disclosure.

In TDD or unpaired spectrum, when a slot format is configured or indicated for a UE, only limited time domain resources may be allocated as UL resources, thereby resulting in problems such as reduced uplink coverage, increased latency, and reduced capacity. To address this problem, a solution is being discussed where a specific time-domain resource within a cell is divided into multiple subbands in the frequency domain and is used for both downlink reception and uplink transmission.

Referring to FIG. 12, a UE may receive TDD configuration information to be semi-statically configured with a slot format, or may receive SFI to be dynamically indicated with a slot format. Here, the TDD configuration information may include cell-specific (or, cell-common) TDD configuration information (e.g., tdd-UL-DL-ConfigurationCommon) or UE-specific TDD configuration information (e.g., tdd-UL-DL-ConfigurationDedicated). D (or DL) denotes downlink, U (or UL) denotes uplink, F denotes flexible, and D/F (or DL/F) denotes D (or DL) or F. Then, the UE may be configured with multiple subbands in the frequency domain for a specific time domain resource (e.g., at least one slot/symbol) (n2 to n3) through a subband configuration/indication from a base station. The subband configuration/indication information may include information about a set of contiguous RBs (e.g., a starting RB, the number of RBs, etc.). The multiple subbands may be subbands having the same or different formats. The subband format may include a downlink (D or, DL) subband and an uplink (U or, UL) subband. The D (or, DL) subband may include one or more downlink RB(s), and the U (or, UL) subband may include one or more uplink RB(s). The downlink RB(s) may refer to resources available for downlink reception, and the uplink RB(s) may refer to resources available for uplink transmission.

Referring to FIG. 13, multiple subbands may be (dynamically) indicated to a UE in the frequency domain with respect to downlink (D or DL) slot(s) or symbol(s) that are semi-statically configured (e.g., TDD configuration) or dynamically indicated (e.g., SFI) from a base station. In the drawing, the multiple subbands include two D (or DL) subbands and one U (or UL) subband. In this case, a resource configured or indicated to receive a downlink signal or channel in the same symbol(s) and a resource configured or indicated to transmit an uplink signal or channel may overlap in time domain. For example, when downlink reception (e.g., CSI-RS) is scheduled in the D (or, DL) subband and uplink transmission (e.g., PUSCH) is scheduled in the U (or, UL) subband, the reception and transmission may overlap in at least one symbol (5th or 6th symbol). Meanwhile, when the subbands are configured, the base station is capable of performing both downlink transmission and uplink reception in the same subband symbol (full duplex), while the UE that supports only half duplex is capable of only performing either downlink reception or uplink transmission in the same subband symbol. Here, the subband symbol refers to a symbol in which a subband is configured. Therefore, when downlink reception and uplink transmission overlap in the same subband symbol (see the circled portion in the drawing), the UE and the base station may operate as follows.

1) When downlink reception and uplink transmission belong to different UEs,

- Each UE can perform downlink reception or uplink transmission without limitation.
- A base station can perform downlink transmission and uplink reception simultaneously.

2) When downlink reception and uplink transmission belong to the same UE,

- The UE cannot simultaneously perform downlink reception and uplink transmission. Accordingly, to resolve collision between downlink reception and uplink transmission, the UE's downlink reception and/or uplink transmission may be limited.
- A base station can perform downlink transmission and uplink reception simultaneously. However, as the UE's downlink reception and/or uplink transmission is limited, the same limitation may be applied to the base station.

Here, the collision situation may not be limited to a case where multiple subbands are dynamically indicated to the UE in the frequency domain for a downlink slot or symbol(s) semi-statically configured or dynamically indicated by the base station. That is, the collision situation may also include a case where multiple subbands are semi-statically configured to the UE in the frequency domain for downlink slot or symbol(s) semi-statically configured or dynamically indicated by the base station

Furthermore, the collision situation may not be limited to a case where multiple subbands are dynamically indicated to the UE in the frequency domain for a flexible slot or symbol(s) semi-statically configured or dynamically indicated by a base station. That is, the collision situation may also include a case where multiple subbands are semi-statically configured to the UE in the frequency domain for a flexible slot or symbol(s) semi-statically configured or dynamically indicated by a base station.

Random Access Channel Procedure (RACH)

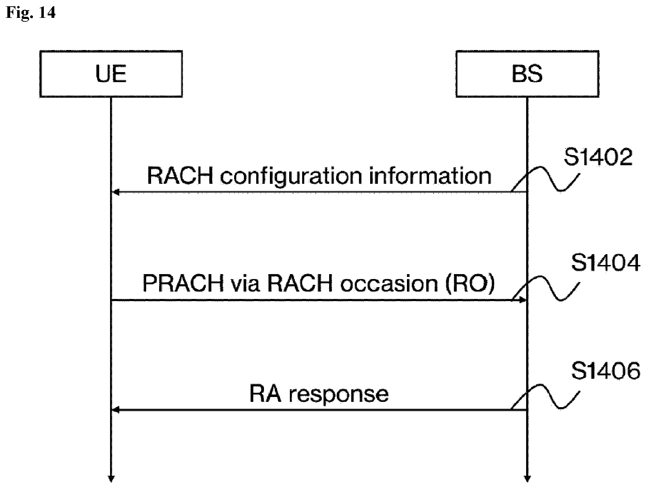

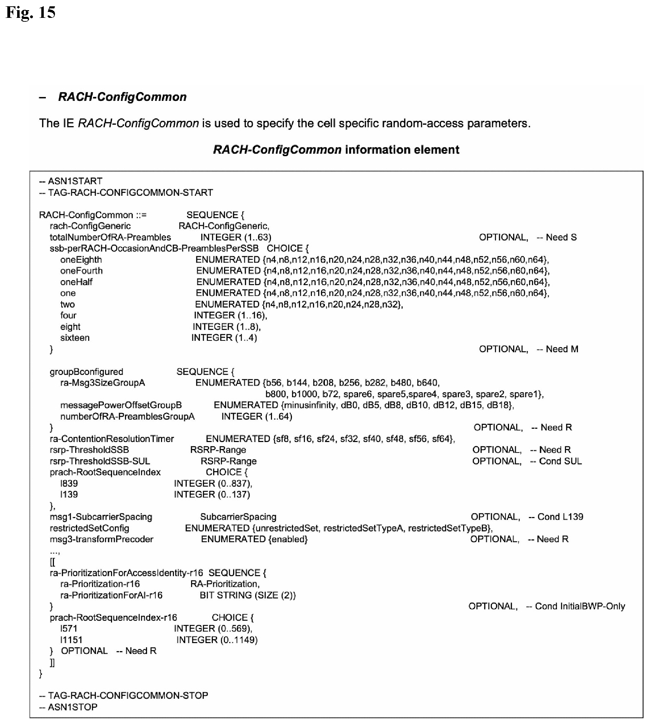

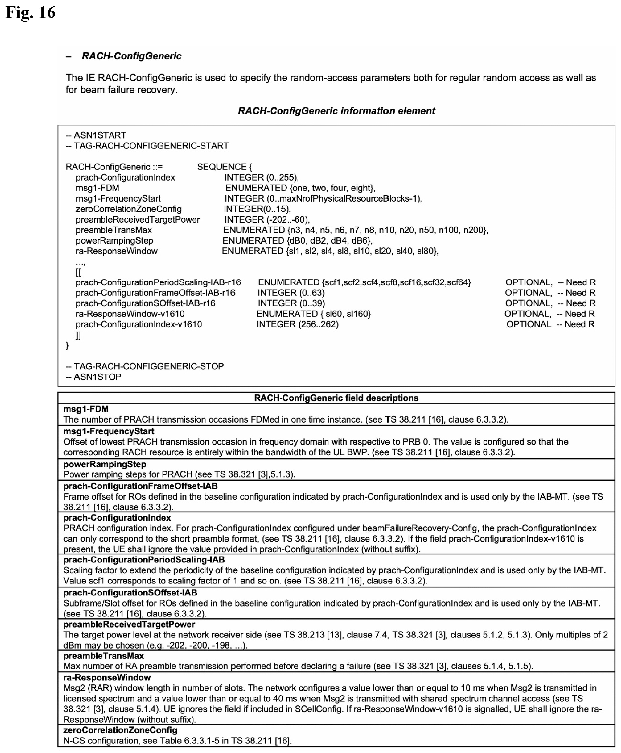

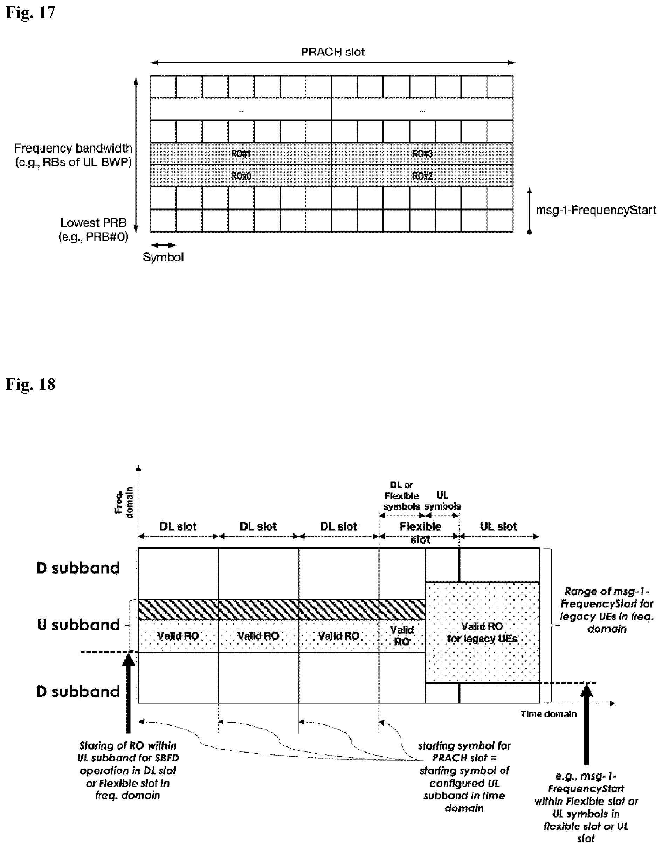

FIG. 14 illustrates a random access procedure. FIGS. 15 and 16 illustrate RACH configuration information. FIG. 17 illustrates a RACH resource.

Referring to FIG. 14, the UE may receive RACH configuration information from the base station (S1402). The RACH configuration information may be received through RACH-ConfigCommon information in the SIB. RACH-ConfigCommon may include rach-ConfigGeneric information. FIGS. 15 and 16 illustrate RACH-ConfigCommon information and rach-ConfigGeneric information used in a legacy NR system. Based on the PRACH configuration index within the rach-ConfigGeneric information, a PRACH slot may be periodically configured in radio frame units (refer to 3GPP TS38.211 V16.9.0 (2022-06), Tables 6.3.3.2-2 to 6.3.3.2-4). Within the PRACH slot, one or more ROs (RACH occasions or PRACH occasions) may be configured in the time domain and one or more ROs may be configured in the frequency domain. The number of symbols and the number of RBs occupied by one RO may be differently defined depending on the PRACH/preamble format. The frequency resource information of the RO(s) configured within the PRACH slot may be determined based on msg1-FDM and msg1-FrequencyStart in the rach-ConfigGeneric information. The msg1-FDM indicates the number of ROs in the frequency domain. The msg1-FrequencyStart indicates the RO start position (e.g., PRB index) in the frequency domain. The msg1-FrequencyStart indicates the offset (e.g., the number of RBs) from the minimum RB (e.g., PRB #0) of the UL BWP to the starting RO. FIG. 17 illustrates multiple ROs configured within a PRACH slot. The drawing illustrates the case in which two ROs are configured in the time domain (TDM) and two ROs are configured in the frequency domain (FDM) in a PRACH slot. FIG. 17 illustrates a case in which a symbol set configuring one RO in the time domain is composed of seven symbols. The RO start position (e.g., PRB#2) in the frequency domain is configured based on the msg1-FrequencyStart. The msg1-FrequencyStart may have a value of 0 to (the number of RBs within the frequency band of the UL BWP - 1).

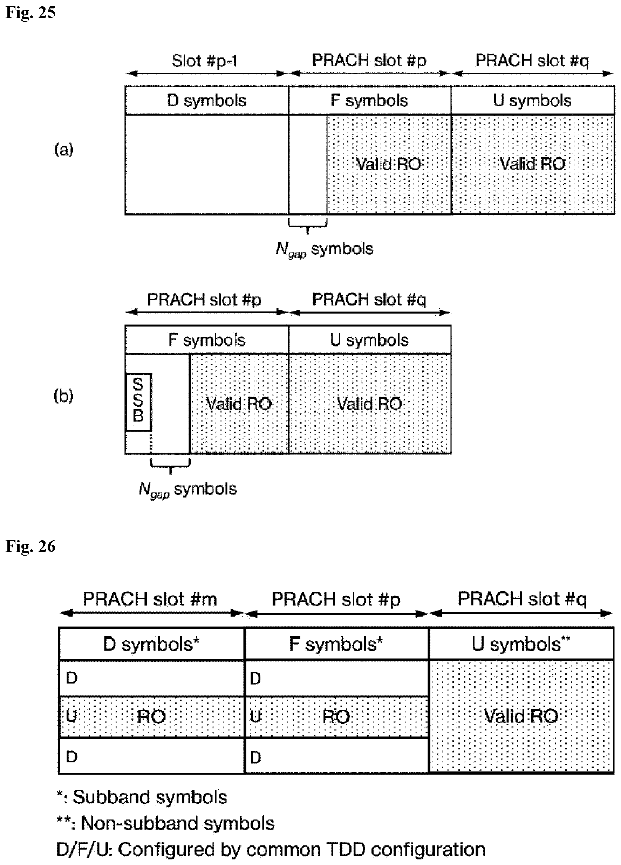

Subsequently, the UE may transmit a PRACH through an RO (S1404). Here, the RO may be selected from the RO set within the PRACH slot. Specifically, the RO may be selected from the valid RO(s) in the RO set within the PRACH slot. For the valid RO, reference may be made to the description of FIG. 25 below. Subsequently, the UE may receive a random access response (RAR) (S1406).

Embodiment: Subband-based full duplex and signal/channel transmission and reception

First, the terms used in the disclosure are summarized.

- Subband-based full duplex: This refers to a method of supporting simultaneous transmission and reception by using a subband within a cell/BWP. This may be referred to as sub-band non-overlapping full duplex (SBFD). Here, the subband refers to a frequency band configured/indicated within a cell/BWP for SBFD operation. One subband may be composed of one set of consecutive (P)RBs. For example, a UL subband may be composed of a set of (P)RBs where UL transmission is possible (i.e., UL-usable RBs). Similarly, a DL subband may be composed of a set of (P)RBs where DL transmission is possible (i.e., DL-usable RBs). An example of the sub-band configuration/format may refer to FIGS. 12 to 13. For example, in the case of an unpaired spectrum (i.e., a TDD cell/BWP), DL and UL subbands may be configured on a DL slot/symbol, or DL and UL subbands may be configured on a flexible slot/symbol. Here, a DL subband on the DL slot/symbol may be explicitly configured or implicitly configured outside the UL subband. A slot/symbol in which a subband is configured in the frequency domain for the SBFD operation may be referred to as SBFD slot/symbol. When a subband is configured in a cell/BWP, the cell/BWP may include an SBFD slot/symbol duration in which TDMed subbands are configured in the time domain and non-SBFD slot/symbol duration in which no subbands are configured.
- SBFD slot/symbol duration: This refers to a time duration in which a subband is configured/indicated in a cell/BWP. For example, an SBFD slot/symbol duration includes a time duration in which a subband (e.g., DL and/or UL subbands) is configured/indicated in the frequency domain. Here, the time duration may include slot(s) and/or symbol(s) (or a symbol set). The SBFD slot/symbol duration may include one or more subbands in the frequency domain. When multiple subbands are configured in the SBFD slot/symbol duration, the subbands are FDMed. In the SBFD slot/symbol duration, multiple subbands (DL subbands or UL subbands) may be configured to be non-overlapping in the frequency domain. The SBFD slot/symbol duration may be simply referred to as an SBFD duration.
- Non-SBFD slot/symbol duration: This refers to a time duration in which a subband is not configured/indicated in a

cell/BWP. The non-SBFD slot/symbol duration includes a time duration in which a DL or UL subband is not configured/indicated. Here, the time duration may include slot(s) and/or symbol(s) (or a symbol set). The non-SBFD slot/symbol duration refers to a legacy duration or a normal duration. The non-SBFD slot/symbol duration includes at least one of a DL symbol, a flexible symbol, and a UL symbol according to a slot format. For example, when a subband is not configured/indicated in the UL BWP, the non-SBFD slot/symbol duration includes the UL slot/symbol. The non-SBFD slot/symbol duration may be simply referred to as a non-SBFD duration.

- Legacy NR system: This refers to a system operating in the conventional NR method because SBFD operation is not supported or configured.

The problem to be solved in the disclosure is related to a case in which a UE is semi-statically configured with or dynamically indicated with multiple subbands in the frequency domain for a downlink slot or symbol(s) (simply, a downlink duration) and/or a flexible slot or symbol(s) (simply, a flexible duration) semi-statically configured or dynamically indicated from a base station. According to the conventional legacy NR system method (refer to FIG. 25), even if an uplink subband is configured in a downlink duration, no RO may be configured in the downlink duration, or if an RO is configured, the RO is considered invalid in the downlink duration. In addition, according to the conventional legacy NR system method (refer to FIG. 25), when configuring an RO in a flexible duration, the validity of the RO is determined in a limited method, for example, by considering a gap after a DL symbol or a gap after a symbol allocated for an SS/PBCH block. Similarly, when following a legacy NR system, when the UE is semi-statically configured or dynamically indicated with a downlink duration and/or a flexible duration from the base station and is configured with an uplink subband for the duration, it may be impossible or limited to configure an RO for transmitting a PRACH preamble within the uplink subband.

- A method for configuring ROs in idle/inactive mode or RRC connected mode, and a method for configuring ROs in a UE

In the disclosure, when the UE is semi-statically configured or dynamically indicated with multiple subbands in the frequency domain for a downlink duration and/or a flexible duration that the UE is semi-statically configured or dynamically indicated from the base station, or when an uplink subband is semi-statically configured or dynamically indicated, a method for configuring ROs for the UE in the idle mode, the inactive mode, or the RRC connected mode is proposed.

As a first embodiment, when the UE is semi-statically configured or dynamically indicated with multiple subbands in the frequency domain for a downlink or flexible duration semi-statically configured or dynamically indicated from the base station, or when an uplink subband is semi-statically configured or dynamically indicated, a method to configure an RO configuration for a UE supporting a subband operation as the same (common) as an RO configuration for a legacy UE may be considered through the higher layer (e.g., RRC) parameters configured in the conventional legacy NR system. Here, the UE supporting the sub-band operation may support multiple sub-band operations in the frequency domain. FIGS. 15 and 16 illustrate higher layer (e.g., RRC) information used to configure an RO in a legacy NR system. FIGS. 15 and 16 respectively illustrate Rach-ConfigCommon information and Rach-ConfigGeneric information, and more detailed information may be referred to 3GPP TS 38.331 Rel-16. For convenience, RRC information of the legacy NR system is referred to as legacy RRC information (e.g., legacy Rach-ConfigCommon, legacy Rach-ConfigGeneric).

In this case, the RO for the UE supporting the sub-band operation may be configured by using the RO configuration configured to the flexible or uplink duration in the legacy NR system as it is, without additional handling. In this case, all ROs that are fully or partially overlapped with the downlink subband configured in the downlink duration on the frequency axis may be considered invalid. That is, the RO configured outside the UL subband (i.e., UL-usable RBs) in the SBFD symbol may be determined as an invalid RO. However, in this case, the configuration of the RO in the uplink subband configured in the downlink duration may be inefficient. To compensate for this, the following options may be considered.

As one embodiment, the disclosure proposes a method of configuring an RO from the starting RB index of an uplink subband for a downlink duration and/or a flexible duration configured with an uplink subband. For example, in a downlink duration and/or a flexible duration configured with an uplink subband, the start position of the RO on the frequency axis may be configured to the offset (for convenience, msg-1-FrequencyStart_SBFD) of the lowest PRACH transmission occasion on the frequency, regardless of the configuration of msg-1-FrequencyStart in the legacy Rach-ConfigGeneric, as the starting RB index (e.g., the lowest RB index, RB#0) to which the uplink subband is allocated. Here, msg-1-FrequencyStart_SBFD is determined based on legacy RO configuration information. Therefore, in the SBFD slot/symbol, msg-1-FrequencyStart may be interpreted as being replaced with the starting RB index of the uplink (U) subband. That is, the msg-1-FrequencyStart may be interpreted differently depending on the type of symbol in which the RO is configured. Through this, a corresponding RACH resource may be configured as much as possible within the BW of the uplink subband. In addition, when a guard band is required to consider interference between subbands between a downlink subband and an uplink subband in the frequency domain, at least one or more PRBs separated from the downlink subband may be configured as an offset, and an RO may be configured starting from the RB index of the uplink subband

after the offset.

FIG. 18 illustrates an example of configuring an RO from a starting RB index of an uplink (U) subband for a downlink duration and/or a flexible duration configured with the uplink (U) subband according to the embodiment. When a guard band between the subbands is required in FIG. 18, at least one PRB separated from the downlink (D) subband may be configured as an offset, and the RO may be configured from the RB index of the U subband starting from the offset. Meanwhile, the start position of the RO configured for the legacy UE, i.e., the UE that does not recognize the SBFD operation, on the frequency axis is configured according to msg-1-FrequencyStart in legacy Rach-ConfigGeneric. That is, in a flexible duration and/or UL duration where a subband is not configured, the RO is configured after msg-1-FrequencyStart from the start position (e.g., PRB#0) of the UL BWP. In addition, on the time axis, a method may be used to configure a PRACH slot and an RO in the downlink/flexible duration on the time axis where the U subband is configured, by allowing the PRACH slot to be configured based on the start time of the U subband configuration. In the drawing, the PRACH slot may be configured discontinuously within a radio frame based on RACH configuration information.

As another embodiment, in the disclosure, for the downlink duration and/or the flexible duration configured with the uplink (U) subband, a method for configuring an RO from the starting RB index of the uplink subband is possible, that is, the start position of the RO on the frequency axis in the downlink duration for which the uplink subband is configured may be configured to maximize the configuration of corresponding RACH resources within the BW of the uplink subband by configuring the offset (hereinafter, msg-1-FrequencyStart_SBFD) of the lowest PRACH transmission occasion on the frequency axis from the starting RB index (e.g., lowest RB index, RB#0) to which the uplink subband is allocated, regardless of the configuration of msg-1-FrequencyStart configured in the legacy Rach-ConfigGeneric. Here, the msg-1-FrequencyStart_SBFD is determined based on the legacy RO configuration information. Therefore, in the SBFD slot/symbol, the msg-1-FrequencyStart may be interpreted as an offset value configured based on the starting RB index of the U subband. That is, the msg-1-FrequencyStart may be interpreted differently depending on the type of symbol to which the RO is configured. In addition, when a guard band is required to consider interference between subbands in the frequency domain between a downlink subband and an uplink subband, at least one or more PRBs separated from the downlink subband may be configured as an offset, and an RO may be configured starting from the RB index of the uplink subband after the offset so that the RACH resource is allocated.

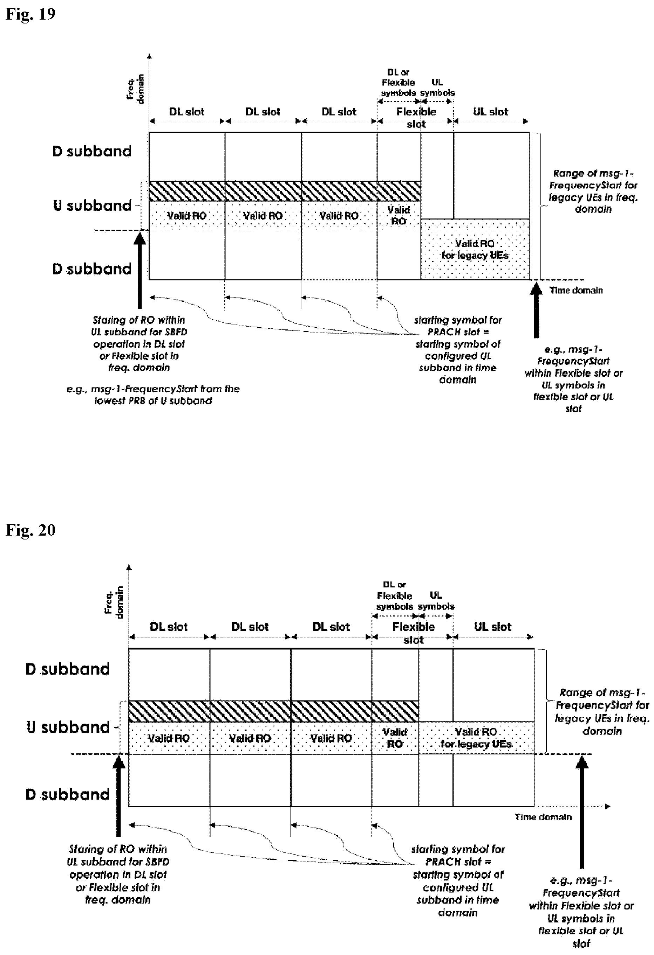

FIG. 19 illustrates an example of configuring an RO after the starting RB index of the U subband from msg-1-FrequencyStart for a downlink duration and/or a flexible duration configured with the uplink (U) subband according to the embodiment. The drawing illustrates a case in which msg-1-FrequencyStart = 0. When a guard band between the subbands is required in FIG. 19, at least one PRB separated from the downlink (D) subband may be configured as an offset, and the RO may be configured from the RB index of the U subband starting from the offset. Meanwhile, the start position of the RO configured for the legacy UE, i.e., the UE that does not recognize the SBFD operation, on the frequency axis is configured according to msg-1-FrequencyStart in legacy Rach-ConfigGeneric. That is, in a flexible duration and/or UL duration where a subband is not configured, the RO is configured after msg-1-FrequencyStart from the start position (e.g., PRB#0) of the UL BWP. In addition, on the time axis, a method may be used to configure a PRACH slot and an RO in the downlink/flexible duration on the time axis where the uplink subband is configured, by allowing the PRACH slot to be configured based on the start time of the uplink subband configuration. In the drawing, the PRACH slot may be configured discontinuously within a radio frame based on RACH configuration information.

As another embodiment, the disclosure proposes a method of configuring an RO from the starting RB index of an uplink subband for a downlink duration and/or a flexible duration configured with an uplink subband. For example, in a downlink duration and/or a flexible duration configured with an uplink subband, the start position of the RO on the frequency axis may be configured using the same msg-1-FrequencyStart configured in legacy Rach-ConfigGeneric. To this end, the offset (for convenience, msg-1-FrequencyStart_SBFD) of the lowest PRACH transmission occasion on the frequency axis may be limited to a value after the starting RB index (e.g., the lowest RB index, RB #0) at which the uplink subband is allocated. Therefore, the msg-1-FrequencyStart may be interpreted as having the same value regardless of the type of symbol in which the RO is configured.

FIG. 20 illustrates a method for configuring an RO that is configured identically (commonly) to both a UE that does not recognize the SBFD operation and a UE that recognizes the SBFD operation according to the embodiment. Referring to the drawing, an example is illustrated in which msg-1-FrequencyStart allows an RO to be configured after the starting RB index of the U subband for a downlink duration and/or a flexible duration configured with an uplink (U) subband. The drawing illustrates a case in which msg-1-FrequencyStart is the starting RB index of the U subband. When a guard band between the subbands is required in FIG. 19, at least one PRB separated from the downlink (D) subband may be configured as an offset, and the RO may be configured from the RB index of the U subband starting from the offset. Accordingly, the start position of the RO configured for the legacy UE, i.e., the UE that does not recognize the SBFD operation, on the frequency axis may be configured after the starting RB index of the U subband. In addition, on the time axis, a method may be used to configure a PRACH slot and an RO in the downlink/flexible duration on the time axis where the uplink subband is configured, by allowing the PRACH slot to be configured based on the start time of the uplink subband

configuration on the time axis. In the drawing, the PRACH slot may be configured discontinuously within a radio frame based on RACH configuration information.

The RO start position on the frequency axis according to FIG. 18 is as follows.

[Table 4]

| Signal | legacy Rach-ConfigGeneric<br>> msg-1-FrequencyStart (hereinafter, offset#1)<br>* common for SBFD/non-SBFD UEs |
|---|---|
| non-SBFD slot/symbol duration | Starting RB (e.g., RB#0) of a bandwidth + offset#1 |
| SBFD slot/symbol duration (opt#1) | Starting RB of U subband<br>(e.g., Starting RB of a bandwidth + offset#1, where a value of msg-1-FrequencyStart is reinterpreted as being replaced with the starting RB of UL usable RBs) |
| SBFD slot/symbol duration (opt#2) | Starting RB of U subband + offset#2 |
| * offset#2: It may be configured by the base station or configured to a pre-determined value to mitigate interference between subbands | |

The start position of the RO on the frequency axis according to FIG. 19 is as follows.

[Table 5]

| Signal | legacy Rach-ConfigGeneric<br>> msg-1-FrequencyStart (hereinafter, offset#1)<br>* common for SBFD/non-SBFD UEs |
|---|---|
| non-SBFD slot/symbol duration | Starting RB (e.g., RB#0) of UL BWP (UL usable RBs) + offset#1 |
| SBFD slot/symbol duration (opt#1) | Starting RB of U subband + offset#1<br>(e.g., msg-1-FrequencyStart is reinterpreted as representing an offset from the starting RB of UL usable RBs) |
| SBFD slot/symbol duration (opt#2) | Starting RB of U subband + offset#1 + offset#2 |

The RO start position on the frequency axis according to FIG. 20 is as follows.

[Table 6]

| Signal | legacy Rach-ConfigGeneric<br>> msg-1-FrequencyStart (hereinafter, offset#1)<br>* common for SBFD/non-SBFD UEs |
|---|---|
| non-SBFD slot/symbol duration | Starting RB of UL BWP (UL usable RBs) + offset#1 |
| SBFD slot/symbol duration (opt#1) | Starting RB of UL BWP + offset#1<br>(e.g., msg-1-FrequencyStart is restricted by a BS to have a value equal to or larger than the starting RB of UL usable RBs) |
| SBFD slot/symbol duration (opt#2) | Starting RB of UL BWP (UL usable RBs) + offset#1<br>(e.g., msg-1-FrequencyStart is restricted by a BS to have a value equal to or larger than a sum of the starting RB of UL usable RBs and a guard band) |

As a second embodiment, when a UE is semi-statically configured or dynamically indicated with multiple subbands in the frequency domain for downlink/flexible slots or symbol(s) semi-statically configured or dynamically indicated from a base station, or when an uplink subband is semi-statically configured or dynamically indicated, in addition to Rach-ConfigCommon or Rach-ConfigGeneric configured for configuring RO in flexible/uplink slots or symbol(s) in the conventional legacy NR system, a method of independently configuring Rach-ConfigCommon-r19 or Rach-ConfigGeneric-r19 for a UE supporting subband operation in the frequency domain to configure RO within an uplink subband may be considered. However, when the UE receives two pieces of independent RO configuration information (e.g., legacy Rach-

ConfigCommon and Rach-ConfigCommon-r19) and needs to configure ROs, the following methods may be considered.

First, Legacy Rach-ConfigCommon or Rach-ConfigGeneric may be used for RO configuration in flexible/uplink slots or symbol(s) in which an uplink subband is not configured, and RO configuration in downlink/flexible slots or symbol(s) in which an uplink subband is configured may use Rach-ConfigCommon-r19 or Rach-ConfigGeneric-r19.

Second, Legacy Rach-ConfigCommon or Rach-ConfigGeneric may be used for RO configuration in an uplink slot or symbols (s) that are not affected by the configuration of an uplink subband, and RO configuration in downlink/flexible slots or symbols (s) with a configured uplink subband may use Rach-ConfigCommon-r19 or Rach-ConfigGeneric-r19.

Third, Legacy Rach-ConfigCommon or Rach-ConfigGeneric may be used for RO configuration in flexible/uplink slots or symbol(s), as in the conventional legacy method, regardless of the configuration of the uplink subband, and RO configuration in a downlink slot or symbol(s) with a configured uplink subband may use Rach-ConfigCommon-r19 or Rach-ConfigGeneric-r19.

The problem to be solved in the disclosure is related to a case in which a UE is semi-statically configured or dynamically indicated with multiple subbands in the frequency domain for downlink/flexible slots or symbol(s) semi-statically configured or dynamically indicated by a base station. According to the conventional legacy NR system method, even if an uplink subband is configured in a downlink slot or symbol, an RO cannot be configured for the UE in the corresponding downlink slot or symbol(s), or even if an RO is configured, the RO in the corresponding downlink slot or symbol(s) is considered invalid. Therefore, the legacy mapping of the RO and SS/PBCH block (hereinafter, SSB) is not valid in the corresponding downlink slot or symbol(s). In addition, in legacy NR, since the RO configuration in a flexible slot or symbol and an uplink slot or symbol and the RO configuration in an uplink subband are different in terms of resource allocation in the time and frequency axes, it is necessary to additionally define mapping between the RO and the SSB index in the uplink subband. Therefore, the disclosure proposes a mapping method of an RO and an SSB index according to a configuration method of an RO configured for a UE in an idle mode, an inactive mode, or an RRC connected mode, when a UE is semi-statically configured or dynamically indicated with multiple subbands in the frequency domain for downlink/flexible slots or symbol(s) semi-statically configured or dynamically indicated by a base station, or when an uplink subband is semi-statically configured or dynamically indicated.

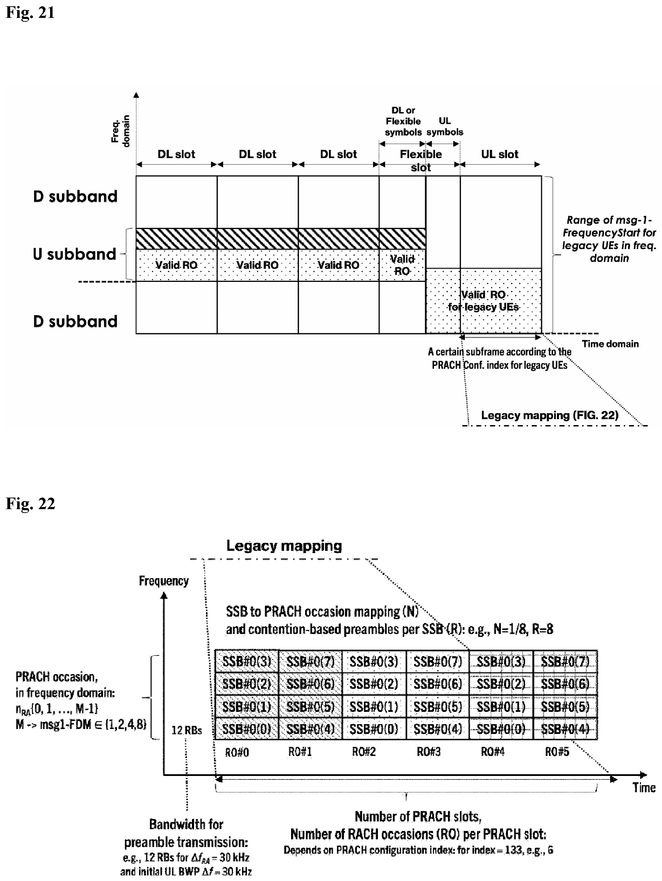

FIGS. 21 and 22 illustrate a specific RO configuration and a mapping method of an RO and an SSB index for legacy UEs used in a legacy NR system, as an example of the configurations. In FIG. 22, the SSB to PRACH occasion mapping (N) indicates that 1/N PRACH occasions are mapped to one SSB index. The competition-based preambles per SSB (R) indicate that R competition-based preambles are associated with one SSB index. When N is less than 1, one SSB index is mapped to 1/N consecutive valid PRACH occasion(s), and R contention-based preambles having consecutive indices associated with the SSB index start from preamble index 0 for each valid PRACH occasion. When N is equal to or greater than 1, R contention-based preambles associated with an SSB index n (0<=n<=N-1) per valid PRACH occasion start from a preamble index n*(total number of preambles)/N.

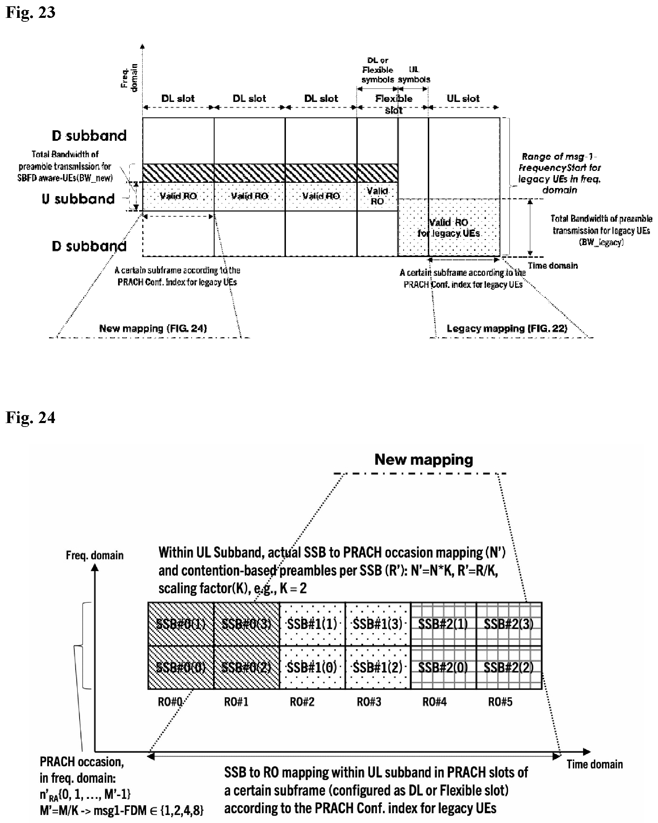

FIGS. 23 and 24 illustrate, as an embodiment of the disclosure, a mapping method of an RO and an SSB index according to a method for configuring an RO configured on an uplink subband when a UE is semi-statically configured or dynamically indicated with multiple subbands in the frequency domain for downlink/flexible slots or symbol(s) semi-statically configured or dynamically indicated by a base station, or when an uplink subband is semi-statically configured or dynamically indicated.

The total bandwidth (BW_new) of preamble transmissions configured within the uplink subband and the total bandwidth (BW_legacy) of preamble transmissions on a flexible slot or symbol and an UL slot or symbol configured for legacy UEs in the legacy NR system may be different or independently configured as shown in FIG. 23. Therefore, the disclosure proposes a method of mapping RO and SSB indices within an uplink subband based on the total bandwidth of preamble transmissions configured within an uplink subband and the total bandwidth of preamble transmissions for legacy UEs, as a method of performing mapping of RO and SSB indices.

The total bandwidth of the preamble transmissions for legacy UEs may occupy a larger BW than the total bandwidth of the preamble transmissions configured in the uplink subband in order to perform the RO configuration for multiple UEs in the cell. Therefore, a mapping method of RO and SSB indices according to the following embodiments may be used using a scaling factor.

As an embodiment, the scaling factor (K) = floor(BW_legacy / BW_new), where floor(x) refers to a natural number less than x.

As another embodiment, the scaling factor (K) = floor(BW_legacy / BW_new), where floor(x) refers to a natural number less than x, and K may be limited to a value that is a power of 2. That is, if the value is in the range 1 <= floor(x) < 2, it may be configured to 1, if the value is in the range 2 <= floor(x) < 4, it may be configured to 2, if the value is in the range 4 <= floor(x) < 8, it may be configured to 4, and if the value is in the range 8 <= floor(x) < 16, it may be configured to 8.

As another embodiment, the scaling factor (K) may be configured as the ratio of the size of the BW for the uplink subband and the UL BWP size. Scaling factor (K) = floor(UL_BWP size/ BW size for UL subband), where floor(x) refers to a natural number less than x.

As another embodiment, the scaling factor (K) = floor(UL_BWP size/ BW size for UL subband), where floor(x)

refers to a natural number less than x, and K may be configured to be limited to a value that is a power of 2. That is, if the value is in the range 1 <= floor(x) < 2, it may be configured to 1, if the value is in the range 2 <= floor(x) < 4, it may be configured to 2, if the value is in the range 4 <= floor(x) < 8, it may be configured to 4, and if the value is in the range 8 <= floor(x) < 16, it may be configured to 8.

As another embodiment, a method that fixes the scaling factor (K) to a specific value or configures the scaling factor (K) to the UE according to a configuration may be used.

As another embodiment, the scaling factor (K) may be fixed to a specific value or configured for the UE according to the configuration, and K may be fixed or configured to be limited only to a value that is a power of 2.

As an embodiment of the disclosure, in FIG. 24, an actual SSB to PRACH occasion mapping (N') for mapping a valid RO and an actual SSB within an uplink subband indicates that 1/N' PRACH occasions are mapped to one SSB index. N' may be configured as N'=N*K based on a parameter N configured in a legacy NR system and a scaling factor K value. In addition, the contention-based preambles per SSB (R') configured in the uplink subband indicate that R' contention-based preambles are linked per SSB index, and may be configured as R'=R/K depending on the parameter R and the scaling factor K value configured in the legacy NR system. In addition, the BW occupied by the PRACH occasion in the frequency domain within the uplink subband may also be configured to M'=M/K depending on the msg-1 FDM (M) and scaling factor K value configured in the legacy NR. Therefore, mapping between the valid RO and actual SSB within the uplink subband may be performed using the RO configuration and parameters for RO and SSB mapping configured in the conventional legacy NR system.

FIG. 24 illustrates a mapping method between an RO and an SSB index according to a method for configuring an RO on an uplink subband when a UE is semi-statically configured or dynamically indicated with multiple subbands in the frequency domain for downlink/flexible slots or symbol(s) semi-statically configured or dynamically indicated by a base station, or when an uplink subband is semi-statically configured or dynamically indicated by applying a scaling factor K of 2.

As another embodiment, a method of applying a scaling factor only to at least one of N', R', and M' may also be considered.

The problem to be solved in the disclosure concerns a situation where a signal or channel configured or indicated to be received by a UE collides with an RO in the same symbol. The RO is configured within a PRACH slot. The PRACH slot is periodically configured in a radio frame unit, based on a PRACH configuration index that is higher layer (e.g., RRC) information (refer to 3GPP TS38.211 V16.9.0 (2022-06), Tables 6.3.3.2-2 to 6.3.3.2-4). FIG. 17 illustrates multiple ROs configured within a PRACH slot.

Whether an RO is valid may be determined based on the slot format configuration of a PRACH slot. The UE may perform uplink transmission (e.g., PRACH) or downlink reception (e.g., PDSCH, CSI-RS) based on whether the RO is valid. Specifically, the UE may perform PRACH transmission on a valid RO. Furthermore, when the valid RO (including a gap symbol) and downlink reception (e.g., PDSCH reception or CSI-RS reception) overlap in the time domain, the UE may skip the downlink reception. On the other hand, when an RO is invalid, the UE may not perform PRACH transmission on the RO. Furthermore, even if an RO (including gap symbol) and downlink reception overlap in the time domain, the UE may perform the downlink reception normally when the RO is invalid. In a conventional NR system, the UE may determine a valid RO in TDD or unpaired spectrum as follows. Specifically, the valid RO may be determined as follows, based on whether tdd-UL-DL-ConfigurationCommon, which is information about the symbol type, is configured for the UE. The tdd-UL-DL-ConfigurationCommon may be received via a cell-specific (or cell-common) RRC signal or system information block 1 (SIB1).

- When tdd-UL-DL-ConfigurationCommon is not configured for the UE:
  An RO within a PRACH slot may be valid when the RO does not precede an SS/PBCH block within the same PRACH slot in the time domain and starts at least $N_{gap}$ symbols after a last SS/PBCH block reception symbol. Here, the last SS/PBCH block reception symbol refers to the last reception symbol of a last SS/PBCH block before the RO.
- When tdd-UL-DL-ConfigurationCommon is configured for the UE (FIG. 25):
  An RO within a PRACH slot is valid when the RO is on a UL symbol(s). Furthermore, when an RO within a PRACH slot starts at least $N_{gap}$ symbols after a last DL symbol without preceding an SS/PBCH block within the same PRACH slot in time domain (FIG. 25(a)) and starts at least $N_{gap}$ symbols after a last SS/PBCH block reception symbol (FIG. 25(b)), then the RO may be valid. Here, the last DL symbol refers to the last DL symbol before the RO in a DL symbol set configured by the tdd-UL-DL-ConfigurationCommon. In the drawings, a D symbol refers to a cell-common (or cell-specific) DL symbol, an F symbol refers to a cell-common (or cell-specific) flexible symbol, and a U symbol refers to a cell-common (or cell-specific) UL symbol.

Table 7 shows $N_{gap}$. In the case of PRACH preamble format B4, $N_{gap}$ may be 0.

[Table 7]

| Preamble SCS | $N_{gap}$ |
|---|---|
| 1.25 kHz or 5 kHz | 0 |
| 15 kHz or 30 kHz or 60 kHz or 120 kHz | 2 |

According to the disclosure of this specification, multiple subbands may be semi-statically configured or dynamically indicated to a UE in the frequency domain for a downlink/flexible slot or symbol(s) semi-statically configured or dynamically indicated by a base station. Here, the multiple subbands may include at least one UL subband, and may include, as another example, at least one DL subband and at least one UL subband. In this case, in addition to the above method, according to one example of the present disclosure, the UE may determine a valid RO in the slot or symbol(s) as follows.

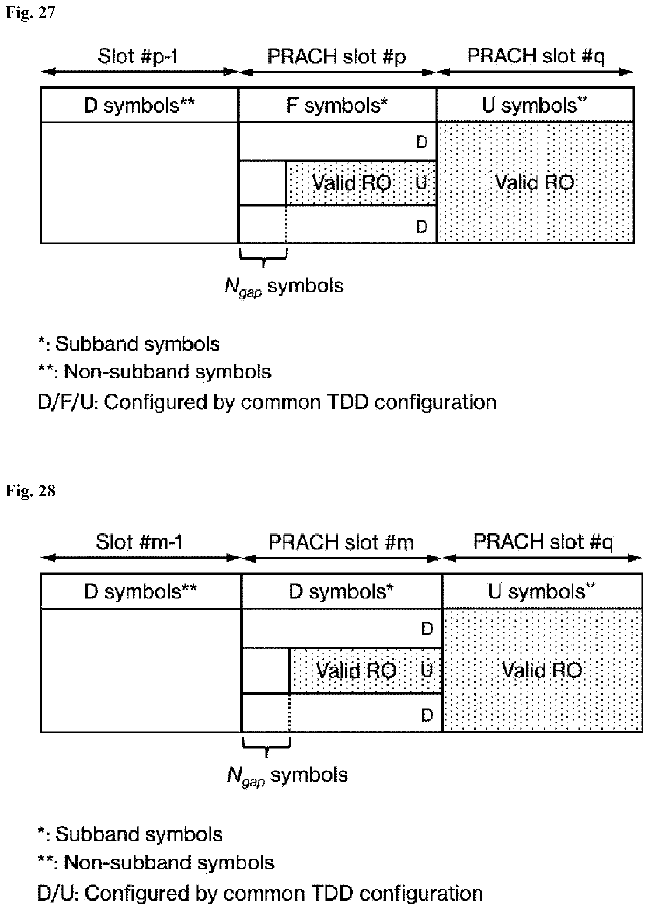

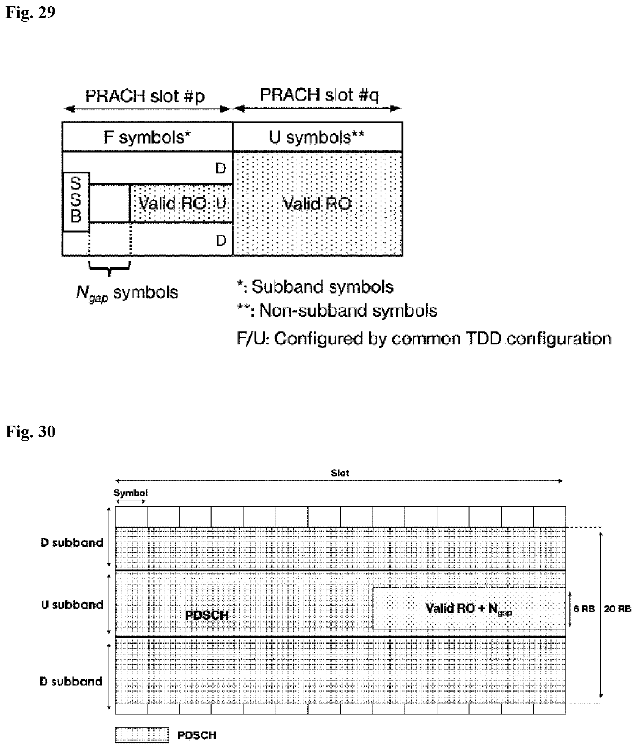

- When tdd-UL-DL-ConfigurationCommon is not configured for the UE:
  An RO within a PRACH slot may be valid when the RO is within an uplink subband, and the RO does not precede an SS/PBCH block within the PRACH slot in the time domain, and starts at least $N_{gap}$ symbols after a last SS/PBCH block reception symbol. Here, the last SS/PBCH block reception symbol refers to the last reception symbol of a last SS/PBCH block before the RO.
- When tdd-UL-DL-ConfigurationCommon is configured for the UE (FIGS. 26 to 29):
  When an RO within a PRACH slot is on a UL symbol(s), the RO may be valid (FIG. 26). When an RO within a PRACH slot is within a UL subband (FIG. 26), and the RO starts at least $N_{gap}$ symbols after a last DL symbol without preceding an SS/PBCH block within the PRACH slot in the time domain (FIGS. 27-28), and starts at least $N_{gap}$ symbols after a last SS/PBCH block reception symbol (FIG. 29), the RO may be valid. Since UL transmission is allowed in a UL subband, the last DL symbol is limited to a DL symbol for which the UL subband is not configured or indicated (i.e., a non-subband symbol). That is, a subband symbol is not included in the last DL symbol. Referring to FIGS. 27 and 28, the last DL symbol refers to a last DL symbol (a last symbol in slot #p-1 or a last symbol in slot #m-1) before the RO in a DL symbol set configured by the tdd-UL-DL-ConfigurationCommon, excluding the symbol(s) for which a UL subband is configured.

In FIGS. 26 to 29, m, p, and q represent slot indices. m, p, and q may be defined according to the PRACH slot configuration and may be configured continuously or discontinuously.

Based on a valid RO (or based on whether an RO is valid), the UE may perform UL transmission or DL reception. For example, the UE may perform PRACH transmission in a valid RO. Furthermore, when a valid RO (including a gap symbol) and downlink reception (e.g., PDSCH reception) overlap in the time domain, either PRACH transmission or DL reception by the UE may be restricted according to the disclosure of the present disclosure. This will be described below with reference to FIGS. 20 to 23. On the one hand, the UE may not perform PRACH transmission in an invalid RO. Furthermore, downlink reception by the UE is not restricted by an invalid RO.

Multiple subbands may be semi-statically configured or dynamically indicated to a UE in the frequency domain for a downlink/flexible slot or symbol(s) semi-statically configured or dynamically indicated by a base station. In this case, a resource, configured or indicated to receive a DL signal/channel, and a valid RO may overlap in the same symbol(s). A UE that supports only half duplex may be capable of performing only either DL reception or UL transmission in the same symbol, and the UE may not receive (e.g., skip reception of) a DL signal/channel (e.g., PDCCH, PDSCH, or CSI-RS) in (i) a valid RO and (ii) $N_{gap}$ symbols before the valid RO. On the other hand, when an RO overlapping a DL signal/channel is invalid, the DL signal/channel may be received normally.

For example, referring to FIG. 30, the UE may be configured or indicated to receive a PDSCH including symbols that overlap the six symbols corresponding to (i) a valid RO and (ii) $N_{gap}$ symbols before the valid RO. In this case, to protect PRACH transmission in the valid RO, the UE may not receive the PDSCH. On the other hand, when there is no actual PRACH transmission in a valid RO, the UE not receiving PDSCHs may reduce downlink coverage by not receiving PDSCHs even though resources configured or indicated to receive PDSCHs in that slot are available. Hereinafter, a UE operation to address this is proposed as follows. Hereinafter, a valid RO may include $N_{gap}$ symbols. That is, a valid RO may be { $N_{gap}$ symbols + RO}. For the $N_{gap}$ symbols, reference may be made to Table 4.

1) PDSCH (or SPS PDSCH) vs valid RO (FIGS. 30 to 33)

Multiple subbands may be configured or indicated to a UE in the frequency domain for a downlink/flexible slot or symbol(s) semi-statically configured or dynamically indicated. Furthermore, the UE may be indicated to receive a PDSCH via a DCI format (e.g., DCI format 1_0, 1_1, or 1_2) for DL scheduling in a corresponding slot or symbol(s) (i.e., subband

slot/symbol). In addition, the UE may be configured to receive a semi-persistent scheduling (SPS) PDSCH via a higher layer (e.g., RRC) in the corresponding slot or symbol(s) (i.e., subband slot/symbol). When the PDSCH (or the SPS PDSCH) and the valid RO overlap in the same symbol in the corresponding slot or symbol(s), the UE operation is as follows.

According to a first embodiment, (a) when there is no actual PRACH transmission, a PDSCH (or SPS PDSCH) may be received, and (b) when there is actual PRACH transmission, a PRACH may be transmitted and the PDSCH may not be received. In the first embodiment, to address the above problem, at least when there is no actual PRACH transmission, the PDSCH (or SPS PDSCH) may be received, thereby preventing a decrease in downlink coverage.

According to a second embodiment, (a) when there is no actual PRACH transmission, a PDSCH (or SPS PDSCH) may be received, and (b) when there is actual PRACH transmission, a PRACH may be transmitted and the PDSCH (or SPS PDSCH) may be rate-matched and received. For example, referring to FIG. 30, a PDSCH (or SPS PDSCH) is indicated to be received at 14 symbols * 20 RBs, a valid RO is determined to be 6 symbols * 6 RBs, and the resource, indicated to receive the PDSCH (or SPS PDSCH), may include all valid ROs. In this case, the UE may rate-match and receive the PDSCH (or SPS PDSCH) by 6 symbols * 6 RBs, which overlap a valid RO, among the 14 symbols * 20 RBs indicated for PDSCH (or SPS PDSCH) reception, and transmit a PRACH in the valid RO. In the second embodiment, even if there is actual PRACH transmission in the overlapping symbols, the UE may rate-match and receive the PDSCH (or SPS PDSCH) in resources where downlink reception is possible. Thus, it is possible to prevent a decrease in downlink coverage.

The first embodiment or the second embodiment may be applied only to PRACH transmission configured/initiated by a higher layer (e.g., medium access control (MAC)). That is, the UE may not expect to detect DCI indicating reception of a PDSCH (or SPS PDSCH) and to detect DCI indicating transmission of a PRACH in the same symbol.

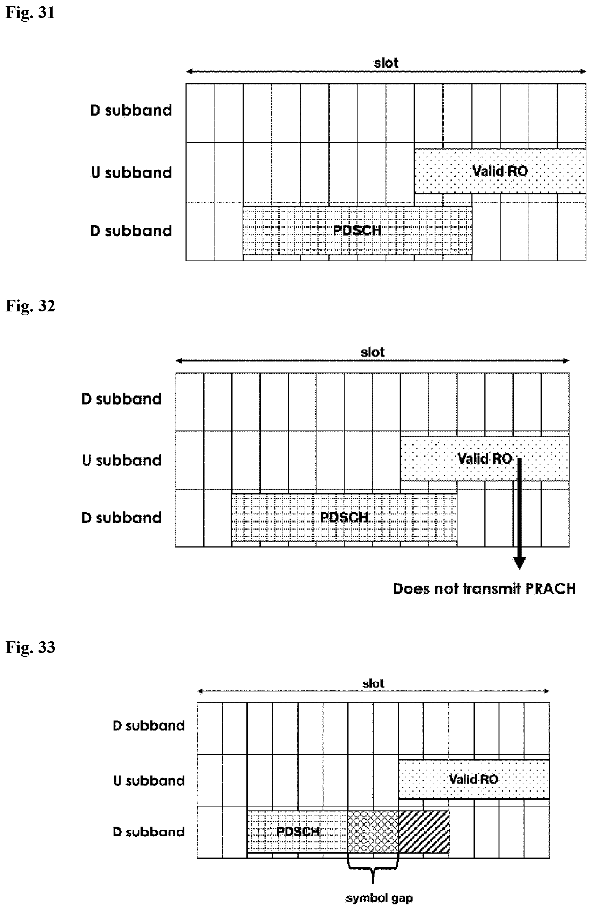

Referring to FIG. 31, a UE may be configured or indicated by the base station to receive a PDSCH in eight symbols, and may determine six symbols as a valid RO. In this case, the valid RO and the PDSCH reception may not overlap in the frequency domain, but may overlap in the time domain (i.e., two symbols). In this case, the UE may operate differently depending on whether the PDSCH reception is configured by a higher layer (e.g., radio resource control (RRC)) or indicated by DCI. Here, the PDSCH reception configured by the higher layer includes SPS PDSCH reception.

According to one embodiment, when PDSCH reception is indicated through a DCI format (e.g., DCI format 1_0, 1_1, or 1_2) for DL scheduling, the UE may receive a PDSCH (i.e., prioritize the PDSCH reception). Referring to FIG. 32, the UE may be indicated to receive a PDSCH in eight symbols within a downlink subband, and may determine a valid RO to be six symbols. In this case, the UE may receive the PDSCH in the eight symbols indicated by DCI, and may not transmit a PRACH in the valid RO. This implies that, at least when the UE is indicated to receive downlink by the base station through the DCI, the UE may determine to prioritize downlink reception for downlink coverage and not transmit the PRACH. On the other hand, unlike the UE that supports half-duplex communication on a subband, the base station supports full-duplex communication. Therefore, as shown in FIG. 32, even when the PRACH transmission by a UE in a valid RO in a subband is limited by the PDSCH reception by the UE, the base station supporting a full duplex operation may transmit a PDSCH to the UE in the valid RO while receiving a PRACH from another UE.

According to another embodiment, when a UE is configured to receive a PDSCH by a higher layer (e.g., RRC), the UE may rate-match and receive the PDSCH, and may perform PRACH transmission in a valid RO. For example, the UE may rate-match and receive the PDSCH in symbols, except for symbols overlapping the valid RO and symbols corresponding to RxTxSwitchingGap, i.e., the gap between downlink reception and uplink transmission ($N_{gap,Rx-Tx}$), and/or the gap between uplink transmission and downlink reception ($N_{gap,Tx-Rx}$), which is configured differently depending on subcarrier spacing (SCS). Here, the values of $N_{gap,Rx-Tx}$ and $N_{gap,Tx-Rx}$ may each be defined independently or may be defined as the same value. For convenience, the switching gap is generalized and referred to as $N_{gap}$. $N_{gap}$may refer to $N_{gap,Rx-Tx}$ and/or $N_{gap,Tx-Rx}$. Referring to FIG. 33, the UE may be configured by a higher layer (e.g., RRC) to receive a PDSCH in eight symbols within a downlink subband, and may determine a valid RO to be six symbols. In this case, the UE may receive the PDSCH with a length of four symbols by rate-matching the PDSCH with respect to two symbols overlapping the valid RO and $N_{gap}$ =2 (i.e., set to $N_{gap,Rx-Tx}$=2, and not limited to this) symbols before the valid RO for PDSCH reception. In addition, the UE may transmit PRACH even in the valid RO. This is a method that prevents the decrease in downlink coverage by rate-matching and receiving the PDSCH on resources where downlink reception is possible, and also allows the UE to perform PRACH transmission when the UE wants to perform the transmission in an RO.

2) CSI-RS vs valid RO

Multiple subbands may be configured or indicated to a UE in the frequency domain for a downlink/flexible slot or symbol(s) semi-statically configured or dynamically indicated. Furthermore, the UE may be indicated to receive a CSI-RS via a DCI format (e.g., DCI format 1_0, 1_1, or 1_2) for DL scheduling on a corresponding slot or symbol(s) (i.e., a subband slot/symbol). When a CSI-RS and a valid RO overlap in the same symbol in the slot or symbol(s), a UE operation is as follows.

According to a first embodiment, (a) when there is no actual PRACH transmission, the CSI-RS may be received and (b) when there is actual PRACH transmission, a PRACH may be transmitted and a CSI-RS may not be received. In the first embodiment, to solve the above problem, at least when there is no actual PRACH transmission, a CSI-RS may be received, thereby preventing a decrease in downlink coverage.

The first embodiment may be applied only when CSI-RS reception is indicated by DCI and PRACH transmission is configured from a higher layer (e.g., MAC). That is, the UE may not expect to receive a CSI-RS and transmit a PRACH in the same symbol from the higher layer.

3) CORESET vs valid RO

Multiple subbands may be configured or indicated to a UE in the frequency domain for a downlink/flexible slot or symbol(s) semi-statically configured or dynamically indicated. Furthermore, a CORESET for monitoring PDCCH on the corresponding slot or symbol(s) (i.e., subband slot/symbol) may be configured for the UE. When a CORESET and a valid RO overlap in the same symbol in the corresponding slot or symbol(s), a UE operation is as follows.

According to a first embodiment, (a) when there is no actual PRACH transmission, a PDCCH may be monitored, and (b) when there is actual PRACH transmission, a PRACH may be transmitted and a PDCCH may not be monitored. In the first embodiment, to solve the above problem, at least when there is no actual PRACH transmission, the PDCCH may be monitored, thereby preventing a decrease in downlink coverage. Furthermore, the PDCCH contains control information, such as resource allocation for the UE, and thus may be prioritized.

The first embodiment may be applied only when PRACH transmission is configured from a higher layer (e.g., MAC). That is, when the UE is indicated to transmit a PRACH, through DCI, on a symbol in which a CORESET is configured, the UE may not monitor a PDCCH regardless of whether the PRACH is actually transmitted in the symbol.

The above-described conflict situation between a valid RO and a CORESET, a PDSCH, or a CSI-RS may not be applied when the UE is transmitting a PRACH for initial cell access (i.e., before RRC connection). That is, in the collision situation, a UE before RRC connection may not monitor PDCCH or receive a PDSCH or a CSI-RS. For example, the UE before RRC connection may perform an operation according to a legacy NR system.

The method and system of the present disclosure are described in relation to specific embodiments, but configuration elements, a part of or the entirety of operations of the present disclosure may be implemented using a computer system having a general-purpose hardware architecture.

The foregoing descriptions of the present disclosure are for illustration purposes, and those skilled in the art, to which the present disclosure belongs, will be able to understand that modification to other specific forms can be easily achieved without changing the technical spirit or essential features of the present disclosure. Therefore, it should be understood that the embodiments described above are illustrative and are not restrictive in all respects. For example, each element described as one type may be implemented in a distributed manner, and similarly, elements described as being distributed may also be implemented in a combined form.

The scope of the present disclosure is indicated by claims to be described hereinafter rather than the detailed description, and all changes or modifications derived from the meaning and scope of the claims and their equivalent concepts should be interpreted as being included in the scope of the present disclosure.

## Claims

**1.** A user equipment (UE) configured to operate in a wireless communication system, the UE comprising:

a communication module; and
a processor controlling the communication module,
wherein the processor is configured to:

receive random access channel (RACH) configuration information, the RACH configuration information including resource block (RB) offset information used to determine a RACH occasion (RO) start position in a frequency domain;
identify an RO set in a physical random access channel (PRACH) slot, based on the RB offset information, the PRACH slot including at least one of a subband non-overlapping full duplex (SBFD) symbol set or a non-SBFD symbol set; and
transmit a PRACH in the RO set,
wherein the SBFD symbol set includes an uplink (UL) subband in the frequency domain, and
wherein a reference RB to which the RB offset information is applied in the PRACH slot is differently configured depending on whether a type of a symbol in which the RO set is positioned is an SBFD symbol.

2. The UE of claim 1, wherein the reference RB is configured as a lowest RB among UL-usable RBs in the SBFD symbol set when the RO set is positioned in the SBFD symbol set, and
wherein the reference RB is configured as a lowest RB within an UL bandwidth part (BWP) in the non-SBFD symbol set when the RO set is positioned in the non-SBFD symbol set.

3. The UE of claim 2, wherein the SBFD symbol set further includes a downlink (DL)-usable RB outside the UL subband in the frequency domain, and
wherein the UL-usable RBs include RBs in the UL subband.

4. The UE of claim 1, wherein the RACH configuration information includes Rach-ConfigGeneric information, and wherein the RB offset information includes msg-1-FrequencyStart.

5. The UE of claim 4, wherein the UL subband is configured based on a higher layer signal.

6. A base station configured to operate in a wireless communication system, the base station comprising:

a communication module; and
a processor controlling the communication module,
wherein the processor is configured to:

transmit random access channel (RACH) configuration information, the RACH configuration information including resource block (RB) offset information used to determine a RACH occasion (RO) start position in a frequency domain;
identify an RO set in a physical random access channel (PRACH) slot, based on the RB offset information, the PRACH slot including at least one of a subband non-overlapping full duplex (SBFD) symbol set or a non-SBFD symbol set; and
receive a PRACH in the RO set,
wherein the SBFD symbol set includes an uplink (UL) subband in the frequency domain, and
wherein a reference RB to which the RB offset information is applied in the PRACH slot is differently configured depending on whether a type of a symbol in which the RO set is positioned is an SBFD symbol.

7. The base station of claim 6, wherein the reference RB is configured as a lowest RB among UL-usable RBs in the SBFD symbol set when the RO set is positioned in the SBFD symbol set, and
wherein the reference RB is configured as a lowest RB within an UL bandwidth part (BWP) in the non-SBFD symbol set when the RO set is positioned in the non-SBFD symbol set.

8. The base station of claim 7, wherein the SBFD symbol set further includes a downlink (DL)-usable RB outside the UL subband in the frequency domain, and
wherein the UL-usable RBs include RBs in the UL subband.

9. The base station of claim 6, wherein the RACH configuration information includes Rach-ConfigGeneric information, and
wherein the RB offset information includes msg-1-FrequencyStart.

10. The base station of claim 9, wherein the UL subband is configured based on a higher layer signal.

11. A method used by a user equipment (UE) in a wireless communication system, the method comprising:

receiving random access channel (RACH) configuration information, the RACH configuration information including resource block (RB) offset information used to determine a RACH occasion (RO) start position in a frequency domain;
identifying an RO set in a physical random access channel (PRACH) slot, based on the RB offset information, the PRACH slot including at least one of a subband non-overlapping full duplex (SBFD) symbol set or a non-SBFD symbol set; and
transmitting a PRACH in the RO set,
wherein the SBFD symbol set includes an uplink (UL) subband in the frequency domain, and
wherein a reference RB to which the RB offset information is applied in the PRACH slot is differently configured depending on whether a type of a symbol in which the RO set is positioned is an SBFD symbol.

**12.** The method of claim 11, wherein the reference RB is configured as a lowest RB among UL-usable RBs in the SBFD symbol set when the RO set is positioned in the SBFD symbol set, and
wherein the reference RB is configured as a lowest RB within an UL bandwidth part (BWP) in the non-SBFD symbol set when the RO set is positioned in the non-SBFD symbol set.

**13.** The method of claim 12, wherein the SBFD symbol set further includes a downlink (DL)-usable RB outside the UL subband in the frequency domain, and
wherein the UL-usable RBs include RBs in the UL subband.

**14.** The method of claim 11, wherein the RACH configuration information includes Rach-ConfigGeneric information, and wherein the RB offset information includes msg-1-FrequencyStart.

**15.** The method of claim 14, wherein the UL subband is configured based on a higher layer signal.

**16.** A method used by a base station in a wireless communication system, the method comprising:

transmitting random access channel (RACH) configuration information, the RACH configuration information including resource block (RB) offset information used to determine a RACH occasion (RO) start position in a frequency domain;
identifying an RO set in a physical random access channel (PRACH) slot, based on the RB offset information, the PRACH slot including at least one of a subband non-overlapping full duplex (SBFD) symbol set or a non-SBFD symbol set; and
receiving a PRACH in the RO set,
wherein the SBFD symbol set includes an uplink (UL) subband in the frequency domain, and
wherein a reference RB to which the RB offset information is applied in the PRACH slot is differently configured depending on whether a type of a symbol in which the RO set is positioned is an SBFD symbol.

**17.** The method of claim 16, wherein the reference RB is configured as a lowest RB among UL-usable RBs in the SBFD symbol set when the RO set is positioned in the SBFD symbol set, and
wherein the reference RB is configured as a lowest RB within an UL bandwidth part (BWP) in the non-SBFD symbol set when the RO set is positioned in the non-SBFD symbol set.

**18.** The method of claim 17, wherein the SBFD symbol set further includes a downlink (DL)-usable RB outside the UL subband in the frequency domain, and
wherein the UL-usable RBs include RBs in the UL subband.

**19.** The method of claim 16, wherein the RACH configuration information includes Rach-ConfigGeneric information, and wherein the RB offset information includes msg-1-FrequencyStart.

**20.** The method of claim 19, wherein the UL subband is configured based on a higher layer signal.

**Fig. 1**

1 radio frame, $T_f = (\Delta f_{max} N_f / 100) \cdot T_c = 10$ms
1 sub-frame, $T_{sf} = (\Delta f_{max} N_f / 1000) \cdot T_c = 1$ms
#0
#1
#2
#3
...
#8
#9
slot#0
slot#1
slot#2
slot#3
...
#slot#($2^\mu$-2)
slot#($2^\mu$-1)
1 slot, $T_{slot} = (\Delta f_{max} N_f / 1000) \cdot T_c \cdot 2^{-\mu} = 2^{-\mu}$ ms

**Fig. 2**

1slot, $2^{-\mu}$ms
$k = N_{grid,x}^{size,\mu} N_{sc}^{RB} - 1$
1 cell, $N_{grid,x}^{size,\mu} N_{sc}^{RB}$ subcarriers
Subcarrier spacing $= 15 * 2^{\mu}$ kHz
One resource block, $N_{sc}^{RB}$ subcarriers
$k = 0$
$l = 0$
$l = N_{symb}^{slot} - 1$

Fig. 3

Initial cell search
System information reception
Random access procedure
General DL/UL Tx/Rx
PSS/SSS & PBCH
PDCCH/PDSCH For RMSI/OSI
PRACH
PDCCH/ PDSCH
PUSCH
PDCCH/ PDSCH
PDCCH/ PDSCH
PUSCH/ PUCCH
S101
S102
S103
S104
S105
S106
S107
S108

Fig. 4a

20 RBs = 240 subcarriers
57
127
56
PSS
PBCH
SSS
PBCH
9
8
l=0
l=1
l=2
l=3

Fig. 4b

Case A (sub 3GHz)
1ms
Half frame (5ms)
Case A (3~6GHz)
Case B (sub 3GHz)
0.5ms
Case B (3~6GHz)
Case C (sub 3GHz)
Case C (above 6GHz)
Case D (above 6GHz)
Case E (above 6GHz)

Fig. 5a

CONTROL INFORMATION
CONTROL INFORMATION
CONTROL INFORMATION
RNTI
RNTI
RNTI
CRC ADDITION
CRC ADDITION
CRC ADDITION
S202
CHANNEL ENCODING
CHANNEL ENCODING
CHANNEL ENCODING
S204
RATE-MATCHING
RATE-MATCHING
RATE-MATCHING
S206
PDCCH
PDCCH
PDCCH
CCE AGGREGATION AND PDCCH MULTIPLEXING
S208
SCRAMBLING
MODULATION
INTERLEAVING
S210

Fig. 5b

PDCCH
PDCCH
PDCCH
PDCCH
PDCCH
8-CCE aggregation
4-CCE aggregation
2-CCE aggregation
1-CCE aggregation
PDCCH using 2CCEs
Unused CCEs
CCEs transmitted in the Control region
Composite control information

**Fig. 6**

CORESET#1
CORESET#2
CORESET#3
1 slot
frequency
time


**Fig. 7**

Common search space
Terminal specific search space
Terminal A
Terminal B

**Fig. 8**

Center frequency A
Center frequency B
Basic frequency block
Basic frequency block
100MHz system BW(logical)
UE A (100MHz)
UE B1 (20MHz)
UE B2 (20MHz)
UE B3 (20MHz)
UE B4 (20MHz)
UE B5 (20MHz)
UE C1 (20MHz)
UE C1 (20MHz)
UE C2 (40MHz)

**Fig. 9**

20MHz
PDCCH
DL COMPONENT CARRIER
SUBFRAME
PDSCH
UL COMPONENT CARRIER
SUBFRAME
PUSCH
(a) Single CC
60MHz
20MHz
20MHz
20MHz
PDCCH
DL COMPONENT CARRIER A
DL COMPONENT CARRIER B
DL COMPONENT CARRIER C
SUBFRAME
PDSCH
UL COMPONENT CARRIER A
UL COMPONENT CARRIER B
UL COMPONENT CARRIER C
SUBFRAME
PUSCH
20MHz
20MHz
20MHz
60MHz
(b) Multiple CC

**Fig. 10**

Primary DL component carrier #0
=DL PCC
DL component carrier #1
DL component carrier #2
PDCCH
PDSCH
Subframe
SIB2 ... connectinon
PUCCH
PUSCH
Subframe
Primary UL component carrier #0
=UL PCC
UL component carrier #1
UL component carrier #2
: CCS
: CIF=0
: CIF=1
: CIF=2

**Fig. 11**

100
200
230
Memory
120
220
210
140
110
121
below 6GHz
221
User interface
Cellular communication interface card (first frequency band)
Cellular communication interface card (first frequency band)
150
122
above 6GHz
222
Display unit
Processor
Cellular communication interface card (second frequency band)
Cellular communication interface card (second frequency band)
Processor
130
123
Unlicensed Radio
223
Memory
Unlicensed band communication interface card(third frequency band)
Unlicensed band communication interface card(third frequency band)

Fig. 12

D slot (n1)
D/F slot (n2)
D/F slot (n3)
U slot (n4)
* Slot formats are configured by TDD configuration or SFI
Subband configuration/indication
D slot (n1)
D/F slot (n2)
D/F slot (n3)
U slot (n4)
Frequency band (e.g., RBs)
U subband
U subband

Fig. 13

D slot by TDD configuration or SFI
CSI-RS
Dynamic subband format indication
D slot by TDD configuration or SFI
D subband
U subband
D subband
CG PUSCH Type 1
CSI-RS

Fig. 14

UE
BS
S1402
RACH configuration information
S1404
PRACH via RACH occasion (RO)
S1406
RA response

Fig. 15

– ***RACH-ConfigCommon***

The IE *RACH-ConfigCommon* is used to specify the cell specific random-access parameters.

***RACH-ConfigCommon* information element**

```
-- ASN1START
-- TAG-RACH-CONFIGCOMMON-START

RACH-ConfigCommon ::=            SEQUENCE {
   rach-ConfigGeneric               RACH-ConfigGeneric,
   totalNumberOfRA-Preambles        INTEGER (1..63)                                   OPTIONAL,   -- Need S
   ssb-perRACH-OccasionAndCB-PreamblesPerSSB   CHOICE {
      oneEighth                     ENUMERATED {n4,n8,n12,n16,n20,n24,n28,n32,n36,n40,n44,n48,n52,n56,n60,n64},
      oneFourth                     ENUMERATED {n4,n8,n12,n16,n20,n24,n28,n32,n36,n40,n44,n48,n52,n56,n60,n64},
      oneHalf                       ENUMERATED {n4,n8,n12,n16,n20,n24,n28,n32,n36,n40,n44,n48,n52,n56,n60,n64},
      one                           ENUMERATED {n4,n8,n12,n16,n20,n24,n28,n32,n36,n40,n44,n48,n52,n56,n60,n64},
      two                           ENUMERATED {n4,n8,n12,n16,n20,n24,n28,n32},
      four                          INTEGER (1..16),
      eight                         INTEGER (1..8),
      sixteen                       INTEGER (1..4)
   }                                                                                  OPTIONAL,   -- Need M

   groupBconfigured                 SEQUENCE {
      ra-Msg3SizeGroupA             ENUMERATED {b56, b144, b208, b256, b282, b480, b640,
                                       b800, b1000, b72, spare6, spare5,spare4, spare3, spare2, spare1},
      messagePowerOffsetGroupB      ENUMERATED {minusinfinity, dB0, dB5, dB8, dB10, dB12, dB15, dB18},
      numberOfRA-PreamblesGroupA    INTEGER (1..64)
   }                                                                                  OPTIONAL,   -- Need R
   ra-ContentionResolutionTimer     ENUMERATED {sf8, sf16, sf24, sf32, sf40, sf48, sf56, sf64},
   rsrp-ThresholdSSB                RSRP-Range                                        OPTIONAL,   -- Need R
   rsrp-ThresholdSSB-SUL            RSRP-Range                                        OPTIONAL,   -- Cond SUL
   prach-RootSequenceIndex          CHOICE {
      l839                          INTEGER (0..837),
      l139                          INTEGER (0..137)
   },
   msg1-SubcarrierSpacing           SubcarrierSpacing                                 OPTIONAL,   -- Cond L139
   restrictedSetConfig              ENUMERATED {unrestrictedSet, restrictedSetTypeA, restrictedSetTypeB},
   msg3-transformPrecoder           ENUMERATED {enabled}                              OPTIONAL,   -- Need R
   ...,
   [[
   ra-PrioritizationForAccessIdentity-r16  SEQUENCE {
      ra-Prioritization-r16         RA-Prioritization,
      ra-PrioritizationForAI-r16    BIT STRING (SIZE (2))
   }                                                                                  OPTIONAL,   -- Cond InitialBWP-Only
   prach-RootSequenceIndex-r16      CHOICE {
      l571                          INTEGER (0..569),
      l1151                         INTEGER (0..1149)
   }  OPTIONAL   -- Need R
   ]]
}

-- TAG-RACH-CONFIGCOMMON-STOP
-- ASN1STOP
```

Fig. 16

– ***RACH-ConfigGeneric***

The IE RACH-ConfigGeneric is used to specify the random-access parameters both for regular random access as well as for beam failure recovery.

***RACH-ConfigGeneric information element***

```
-- ASN1START
-- TAG-RACH-CONFIGGENERIC-START

RACH-ConfigGeneric ::=           SEQUENCE {
    prach-ConfigurationIndex            INTEGER (0..255),
    msg1-FDM                            ENUMERATED {one, two, four, eight},
    msg1-FrequencyStart                 INTEGER (0..maxNrofPhysicalResourceBlocks-1),
    zeroCorrelationZoneConfig           INTEGER(0..15),
    preambleReceivedTargetPower         INTEGER (-202..-60),
    preambleTransMax                    ENUMERATED {n3, n4, n5, n6, n7, n8, n10, n20, n50, n100, n200},
    powerRampingStep                    ENUMERATED {dB0, dB2, dB4, dB6},
    ra-ResponseWindow                   ENUMERATED {sl1, sl2, sl4, sl8, sl10, sl20, sl40, sl80},
    ...,
    [[
    prach-ConfigurationPeriodScaling-IAB-r16   ENUMERATED {scf1,scf2,scf4,scf8,scf16,scf32,scf64}   OPTIONAL,  -- Need R
    prach-ConfigurationFrameOffset-IAB-r16     INTEGER (0..63)                                      OPTIONAL,  -- Need R
    prach-ConfigurationSOffset-IAB-r16         INTEGER (0..39)                                      OPTIONAL,  -- Need R
    ra-ResponseWindow-v1610                    ENUMERATED { sl60, sl160}                            OPTIONAL,  -- Need R
    prach-ConfigurationIndex-v1610             INTEGER (256..262)                                   OPTIONAL   -- Need R
    ]]
}

-- TAG-RACH-CONFIGGENERIC-STOP
-- ASN1STOP
```

| **RACH-ConfigGeneric field descriptions** |
|---|
| **msg1-FDM**<br>The number of PRACH transmission occasions FDMed in one time instance. (see TS 38.211 [16], clause 6.3.3.2). |
| **msg1-FrequencyStart**<br>Offset of lowest PRACH transmission occasion in frequency domain with respective to PRB 0. The value is configured so that the corresponding RACH resource is entirely within the bandwidth of the UL BWP. (see TS 38.211 [16], clause 6.3.3.2). |
| **powerRampingStep**<br>Power ramping steps for PRACH (see TS 38.321 [3],5.1.3). |
| **prach-ConfigurationFrameOffset-IAB**<br>Frame offset for ROs defined in the baseline configuration indicated by prach-ConfigurationIndex and is used only by the IAB-MT. (see TS 38.211 [16], clause 6.3.3.2). |
| **prach-ConfigurationIndex**<br>PRACH configuration index. For prach-ConfigurationIndex configured under beamFailureRecovery-Config, the prach-ConfigurationIndex can only correspond to the short preamble format, (see TS 38.211 [16], clause 6.3.3.2). If the field prach-ConfigurationIndex-v1610 is present, the UE shall ignore the value provided in prach-ConfigurationIndex (without suffix). |
| **prach-ConfigurationPeriodScaling-IAB**<br>Scaling factor to extend the periodicity of the baseline configuration indicated by prach-ConfigurationIndex and is used only by the IAB-MT. Value scf1 corresponds to scaling factor of 1 and so on. (see TS 38.211 [16], clause 6.3.3.2). |
| **prach-ConfigurationSOffset-IAB**<br>Subframe/Slot offset for ROs defined in the baseline configuration indicated by prach-ConfigurationIndex and is used only by the IAB-MT. (see TS 38.211 [16], clause 6.3.3.2). |
| **preambleReceivedTargetPower**<br>The target power level at the network receiver side (see TS 38.213 [13], clause 7.4, TS 38.321 [3], clauses 5.1.2, 5.1.3). Only multiples of 2 dBm may be chosen (e.g. -202, -200, -198, ...). |
| **preambleTransMax**<br>Max number of RA preamble transmission performed before declaring a failure (see TS 38.321 [3], clauses 5.1.4, 5.1.5). |
| **ra-ResponseWindow**<br>Msg2 (RAR) window length in number of slots. The network configures a value lower than or equal to 10 ms when Msg2 is transmitted in licensed spectrum and a value lower than or equal to 40 ms when Msg2 is transmitted with shared spectrum channel access (see TS 38.321 [3], clause 5.1.4). UE ignores the field if included in SCellConfig. If ra-ResponseWindow-v1610 is signalled, UE shall ignore the ra-ResponseWindow (without suffix). |
| **zeroCorrelationZoneConfig**<br>N-CS configuration, see Table 6.3.3.1-5 in TS 38.211 [16]. |

Fig. 17

PRACH slot
Frequency bandwidth
(e.g., RBs of UL BWP)
RO#1
RO#3
RO#0
RO#2
Lowest PRB
(e.g., PRB#0)
Symbol
msg-1-FrequencyStart

Fig. 18

Freq. domain
DL or Flexible symbols
UL symbols
DL slot
DL slot
DL slot
Flexible slot
UL slot
D subband
U subband
D subband
Valid RO
Valid RO
Valid RO
Valid RO
Valid RO for legacy UEs
Range of msg-1-FrequencyStart for legacy UEs in freq. domain
Time domain
Staring of RO within UL subband for SBFD operation in DL slot or Flexible slot in freq. domain
starting symbol for PRACH slot = starting symbol of configured UL subband in time domain
e.g., msg-1-FrequencyStart within Flexible slot or UL symbols in flexible slot or UL slot

Fig. 19

Freq. domain
DL or Flexible symbols
UL symbols
DL slot
DL slot
DL slot
Flexible slot
UL slot
D subband
U subband
D subband
Valid RO
Valid RO
Valid RO
Valid RO
Valid RO for legacy UEs
Range of msg-1-FrequencyStart for legacy UEs in freq. domain
Time domain
Staring of RO within UL subband for SBFD operation in DL slot or Flexible slot in freq. domain
e.g., msg-1-FrequencyStart from the lowest PRB of U subband
starting symbol for PRACH slot = starting symbol of configured UL subband in time domain
e.g., msg-1-FrequencyStart within Flexible slot or UL symbols in flexible slot or UL slot

Fig. 20

Freq. domain
DL or Flexible symbols
UL symbols
DL slot
DL slot
DL slot
Flexible slot
UL slot
D subband
U subband
D subband
Valid RO
Valid RO
Valid RO
Valid RO
Valid RO for legacy UEs
Range of msg-1-FrequencyStart for legacy UEs in freq. domain
Time domain
Staring of RO within UL subband for SBFD operation in DL slot or Flexible slot in freq. domain
starting symbol for PRACH slot = starting symbol of configured UL subband in time domain
e.g., msg-1-FrequencyStart within Flexible slot or UL symbols in flexible slot or UL slot

Fig. 21

Freq. domain
DL or Flexible symbols
UL symbols
DL slot
DL slot
DL slot
Flexible slot
UL slot
D subband
U subband
D subband
Valid RO
Valid RO
Valid RO
Valid RO
Valid RO for legacy UEs
Range of msg-1-FrequencyStart for legacy UEs in freq. domain
Time domain
A certain subframe according to the PRACH Conf. index for legacy UEs
Legacy mapping (FIG. 22)


Fig. 22

Legacy mapping
Frequency
SSB to PRACH occasion mapping (N) and contention-based preambles per SSB (R): e.g., N=1/8, R=8
PRACH occasion, in frequency domain: $n_{RA}${0, 1, ..., M-1} M -> msg1-FDM ∈ {1,2,4,8}
12 RBs
SSB#0(3) SSB#0(7) SSB#0(3) SSB#0(7) SSB#0(3) SSB#0(7)
SSB#0(2) SSB#0(6) SSB#0(2) SSB#0(6) SSB#0(2) SSB#0(6)
SSB#0(1) SSB#0(5) SSB#0(1) SSB#0(5) SSB#0(1) SSB#0(5)
SSB#0(0) SSB#0(4) SSB#0(0) SSB#0(4) SSB#0(0) SSB#0(4)
RO#0 RO#1 RO#2 RO#3 RO#4 RO#5
Time
Bandwidth for preamble transmission: e.g., 12 RBs for $\Delta f_{RA}$ = 30 kHz and initial UL BWP $\Delta f$ = 30 kHz
Number of PRACH slots, Number of RACH occasions (RO) per PRACH slot: Depends on PRACH configuration index: for index = 133, e.g., 6

Fig. 23

Freq. domain
DL slot
DL slot
DL slot
DL or Flexible symbols
UL symbols
Flexible slot
UL slot
D subband
Total Bandwidth of preamble transmission for SBFD aware-UEs(BW_new)
U subband
Valid RO
Valid RO
Valid RO
Valid RO
Range of msg-1-FrequencyStart for legacy UEs in freq. domain
Valid RO for legacy UEs
Total Bandwidth of preamble transmission for legacy UEs (BW_legacy)
D subband
Time domain
A certain subframe according to the PRACH Conf. Index for legacy UEs
A certain subframe according to the PRACH Conf. index for legacy UEs
New mapping (FIG. 24)
Legacy mapping (FIG. 22)

Fig. 24

New mapping
Freq. domain
Within UL Subband, actual SSB to PRACH occasion mapping (N') and contention-based preambles per SSB (R'): N'=N*K, R'=R/K, scaling factor(K), e.g., K = 2
SSB#0(1)
SSB#0(3)
SSB#1(1)
SSB#1(3)
SSB#2(1)
SSB#2(3)
SSB#0(0)
SSB#0(2)
SSB#1(0)
SSB#1(2)
SSB#2(0)
SSB#2(2)
RO#0
RO#1
RO#2
RO#3
RO#4
RO#5
PRACH occasion, in freq. domain: n'RA{0, 1, ..., M'-1} M'=M/K -> msg1-FDM ∈ {1,2,4,8}
SSB to RO mapping within UL subband in PRACH slots of a certain subframe (configured as DL or Flexible slot) according to the PRACH Conf. index for legacy UEs
Time domain

Fig. 25

(a)
Slot #p-1
PRACH slot #p
PRACH slot #q
D symbols
F symbols
U symbols
Valid RO
Valid RO
$N_{gap}$ symbols
(b)
PRACH slot #p
PRACH slot #q
F symbols
U symbols
SSB
Valid RO
Valid RO
$N_{gap}$ symbols


Fig. 26

PRACH slot #m
PRACH slot #p
PRACH slot #q

| D symbols* | F symbols* | U symbols** |
|---|---|---|
| D | D | Valid RO |
| U RO | U RO | |
| D | D | |

*: Subband symbols

**: Non-subband symbols

D/F/U: Configured by common TDD configuration

Fig. 27

Slot #p-1
PRACH slot #p
PRACH slot #q
D symbols**
F symbols*
U symbols**
D
Valid RO
U
D
Valid RO
$N_{gap}$ symbols

*: Subband symbols

**: Non-subband symbols

D/F/U: Configured by common TDD configuration

Fig. 28

Slot #m-1
PRACH slot #m
PRACH slot #q
D symbols**
D symbols*
U symbols**
D
Valid RO
U
D
Valid RO
$N_{gap}$ symbols

*: Subband symbols

**: Non-subband symbols

D/U: Configured by common TDD configuration

Fig. 29

PRACH slot #p
PRACH slot #q
F symbols*
U symbols**
D
S S B
Valid RO U
Valid RO
D
$N_{gap}$ symbols
*: Subband symbols
**: Non-subband symbols
F/U: Configured by common TDD configuration

Fig. 30

Slot
Symbol
D subband
U subband
PDSCH
Valid RO + $N_{gap}$
6 RB
20 RB
D subband
PDSCH

Fig. 31

slot
D subband
U subband
Valid RO
D subband
PDSCH

Fig. 32

slot
D subband
U subband
Valid RO
D subband
PDSCH
Does not transmit PRACH

Fig. 33

slot
D subband
U subband
Valid RO
D subband
PDSCH
symbol gap

## INTERNATIONAL SEARCH REPORT

International application No. **PCT/KR2025/001803**

### A. CLASSIFICATION OF SUBJECT MATTER

**H04W 72/0453**(2023.01)i; **H04W 72/1268**(2023.01)i; **H04W 72/1273**(2023.01)i; **H04W 72/232**(2023.01)i; **H04W 72/11**(2023.01)i; **H04W 72/0446**(2023.01)i; **H04W 74/00**(2009.01)i; **H04W 74/0833**(2024.01)i; **H04L 5/00**(2006.01)i

According to International Patent Classification (IPC) or to both national classification and IPC

### B. FIELDS SEARCHED

Minimum documentation searched (classification system followed by classification symbols)

H04W 72/0453(2023.01); H04L 5/00(2006.01); H04W 72/0446(2023.01); H04W 72/0457(2023.01); H04W 74/08(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: RACH configuration, RB offset, RACH occasion, PRACH slot, SBFD, UL subband, reference RB

### C. DOCUMENTS CONSIDERED TO BE RELEVANT

| Category* | Citation of document, with indication, where appropriate, of the relevant passages | Relevant to claim No. |
|---|---|---|
| A | US 2023-0209605 A1 (TELEFONAKTIEBOLAGET LM ERICSSON (PUBL)) 29 June 2023 (2023-06-29) See paragraphs [0067]-[0071]; and figure 1. | 1-20 |
| A | SK TELECOM et al. On coverage enhancement for random access in R19 Duplex evolution. RP-233464, 3GPP TSG RAN Meeting #102. Edinburgh, United Kingdom. 03 December 2023. See section 2.2, figure 1. | 1-20 |
| A | NOKIA et al. Views on Rel-19 Duplex Evolution WI scope. RP-233550, 3GPP TSG RAN Meeting #102. Edinburgh, United Kingdom. 04 December 2023. See section 2.1. | 1-20 |
| A | US 2023-0337292 A1 (OFINNO, LLC) 19 October 2023 (2023-10-19) See paragraphs [0286]-[0372]; and figure 12. | 1-20 |
| A | US 2023-0403689 A1 (GUANGDONG OPPO MOBILE TELECOMMUNICATIONS CORP., LTD.) 14 December 2023 (2023-12-14) See paragraphs [0045]-[0074]; and figures 1 and 4. | 1-20 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **22 May 2025** | **26 May 2025** |

| Name and mailing address of the ISA/KR | Authorized officer |
|---|---|
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2025/001803**

| Patent document cited in search report | Publication date (day/month/year) | Patent family member(s) | Publication date (day/month/year) |
|---|---|---|---|
| US 2023-0209605 A1 | 29 June 2023 | EP 4122279 A1 | 25 January 2023 |
| | | WO 2021-185146 A1 | 23 September 2021 |
| US 2023-0337292 A1 | 19 October 2023 | US 11412550 B2 | 09 August 2022 |
| | | US 11683846 B2 | 20 June 2023 |
| | | US 2020-0351955 A1 | 05 November 2020 |
| | | US 2022-0377814 A1 | 24 November 2022 |
| US 2023-0403689 A1 | 14 December 2023 | CN 116897572 A | 17 October 2023 |
| | | EP 4304256 A1 | 10 January 2024 |
| | | EP 4304256 A4 | 17 April 2024 |
| | | WO 2022-183383 A1 | 09 September 2022 |

Form PCT/ISA/210 (patent family annex) (July 2022)